# EUROPEAN PATENT APPLICATION

(11) **EP 4 276 132 A1**
(43) Date of publication of application: **15.11.2023**
(21) Application number: 23158388.1
(22) Date of filing: 24.02.2023
(51) Int. Cl.: C08G 63/183, C08J 11/24

(54) **MONOMER RECYCLING OF POLYESTERS**

(30) Priority: 10.05.2022 EP 22172425
(71) Applicant: Polymetrix AG, 9245 Oberbüren (CH)
(72) Inventor: Christel, Andreas, 9524 Zuzwil (CH); Mattes, Kurt Michael, 9242 Oberuzwil (CH)
(74) Representative: Hepp Wenger Ryffel AG

(57) **Abstract**

The present invention is related to a method for the preparation of a polyester, comprising the steps of providing a monomer slurry from a recycled monomer product and at least one diacid monomer, where the monomer product contains 50% to 97% of a condensation monomer and 3% to 50% by weight of a substance which is liquid at ambient conditions, and using the monomer slurry for the polymerization of a polyester, wherein the step of preparing said monomer slurry is executed in a way that allows to maintain the monomer slurry in liquid form. The present invention is furthermore related to solid particles comprising a recycled monomer product and a diacid monomer B at a mole ratio of B'' units -OC-R²-CO- to diacid HOOC-R²-COOH in the range of 5:1 to 1:5. Further the present invention is related to a method for providing a recycled monomer product, where the monomer product contains 50% to 97% by weight of a condensation monomer and 3% to 50% by weight of a substance which is liquid at ambient conditions.

## Description

The present invention is related to a method for monomer recycling from a condensation polymer which is a polyester. It is further related to recycled particles from a condensation polymer which is a polyester.

The preparation of polymers from their monomers is well known and established in large scale. Traditionally the used monomers are derived from fossil resources. The use of fossil resources is based on a linear product flow from fossil resource to polymer to waste. In the long term such linear product flows are not sustainable. As an alternative, the use of monomers derived from renewable resources is proposed to create a more cyclic product flow. However, the resulting cycle from polymer to CO₂ and water to plant based renewable resources to polymer is a long and energy intensive approach to provide polymers.

Especially condensation polymers have the advantage that they can be depolymerized into their monomers and re-polymerized from such recycled monomers. Depending on the depolymerization technology, the same monomers may be obtained that are typically used for the preparation of virgin polymers. In other cases, the recycled monomers may have a different composition and therefore are limited in their use in existing large-scale manufacturing processes. Such limiting differences may be the melting point of a solid monomer, the viscosity of a liquid monomer or the required energy to melt or evaporate the monomers. In particular, differences result from predefined mole ratios of reacted monomers.

Polyesters have a general structure comprising repeat units. They are typically prepared in large scale by polymerizing monomers with each other, wherein said monomers are diols and diacids.

Polyesters are typically prepared in large scale by polymerizing a diol monomer with a substituted diacid monomer. Alternatively, the polyesters can be prepared in large scale by polymerizing cyclic dimers, trimers or oligomers obtained from diol and diacid monomers. Due to ring opening polymerization, a polyester is formed.

These polyesters can be recycled by depolymerization with the addition of a diol monomer. The depolymerization results in a recycled monomer product comprising a condensation monomer having the formula HO-R¹-OOC-R²-COO-R¹-OH, wherein R¹ and R₂ are as defined below. The condensation monomer can be introduced into a conventional polyester preparation process starting from the diol and diacid monomers.

However, the addition of the recycled monomer product shifts the mole ratio of total A and B units defined below. Therefore, the amount of individual diol monomer A has to be reduced and/or the amount of individual diol monomer A that is evaporated from the process has to be increased. Both is possible in a conventional polyester preparation process, but only to a limited degree as the heating capacity for evaporation is limited and the viscosity of the monomer feed changes if the ratio of individual diol monomer A to individual diacid monomer B is lowered.

GB-610136 is an early description of a polyester being depolymerized with a glycol monomer and being repolymerized from the depolymerization solution.

Various methods have been developed to clean the monomer product obtained by depolymerization. Reference is made to US-4,609,680, US-6,642,350, US-2006/074136 and US-6,630,601.

A typical cleaning step is based on crystallization and subsequent filtration. This leaves a monomer product with a significant amount of residual liquid, which has to be eliminated to obtain a pure condensation monomer.

The formation of solid condensation monomer particles is described in EP-2 838 941 A1. Here flash evaporation is used to reduce the liquid content before the particle forming process. Such an evaporation step is energy intensive and, in many cases, not necessary as the equipment used to repolymerize the condensation monomer to a polyester, for example in the esterification step, has sufficient capacity to evaporate residual liquids. Also, the patent is limited to the particle formation of the condensation monomer and does not provide for the formation of particles from a slurry comprising the condensation monomer and a diacid monomer.

WO 2021/032826 A1 describes a method to obtain particles with a high BHET content and a high dry weight with a special characteristic of having a high pore volume by granulating and fluid bed drying crystalline BHET. The high pore volume is said to facilitate dissolution in EG or molten BHET.

WO 2021/032826 A1 describes the option to add solid terephthalic acid to crystalline BHET. However, this results in a dry blend, even when performed after granulation, because granulation is defined as compatible with the maintenance of the crystalline form. Such an inhomogeneous and brittle dry blend is not suitable for transportation. Solid particles containing a specific ratio of those ingredients are not disclosed.

A condensation product without liquid residue may also be obtained by evaporation and condensation of the condensation monomer following the evaporation of all liquid components. This is described in US-10,544,276, where after depolymerization a step to evaporate all diol follows. This leads to the risk of significantly shifting the equilibrium of the depolymerized product back to higher oligomer contents; to some degree a repolymerization occurs. This risk is reduced by lowering the pressure and operating the evaporation in a temperature range below the depolymerization temperature.

US-2020/0127416 A1 describes, for the production of PET, the addition of BHET as a condensation monomer at high temperature to TPA (terephthalic acid) and EG (ethylene glycol), the latter representing a diacid monomer and a diol monomer. BHET is not introduced as a solid into a slurry comprising TPA and EG.

Given the preparation of the BHET, which includes very energy intensive steps of evaporating all volatile liquids from the BHET and subsequently evaporation of the BHET itself, the BHET is inevitably used as a pure substance and therefore must be held above its melting temperature to prevent solidification. This is confirmed by a mixing temperature of 110°C used in US-2020/0127416 A1. The BHET that is supplied to the slurry preparation does not contain (and due to the applied conditions cannot) any substances which are liquid at ambient conditions.

Special difficulties arise from contaminants which are liquid during depolymerization but solidify at lower temperatures.

WO 2021/089803 A1 describes a method where a depolymerization solution inside a depolymerization reactor is separated into a homogeneous first part and a second part containing agglomerates. The agglomerates comprise contaminants. Those parts are then separately removed from the reaction vessel. This requires performing the separation at the temperature of the depolymerization or it requires cooling inside the reaction vessel, which in the presence of a liquifying contaminant leads to solidification of such contaminant and poses the risk of severe blockage inside the reactor.

WO 2021/089809 A1 describes a method where a contaminant is separated from a depolymerization solution in a separation vessel by density separation. In the process, first the entire depolymerization solution is cooled to precipitate the contaminant. Only thereafter the contaminant is separated and collected. Consequently, the contaminant is only separated after it has been solidified based on its density difference in solid form compared to the diluted solution.

It was the problem of the present invention to provide an improved method which overcome the disadvantages of the methods described above. This problem is solved by the method of the present invention.

In detail, the present invention provides a method to efficiently prepare and use a monomer product containing residual liquid according to claim 1.

The present invention further provides a method to prepare particles of a slurry specifically suitable for the preparation of a polyester according to claim 9.

The present invention further provides particles of a slurry specifically suitable for the preparation of a polyester according to claim 11.

The present invention further provides a method which adapts the depolymerization process in a way to facilitate the return of used solvents and at the same time reduces the formation of by-products according to claim 15 and 17.

The present invention further provides a method which optimizes the addition of a cooling liquid to the depolymerization solution in such a way that the formation of by-products is reduced according to claim 15 and 21.

The present invention further provides a method which optimizes the separation of contaminants which are liquid under depolymerization conditions and solidify during cooling to room temperature according to claim 15 and 22.

Specifically, the above problem is solved by a method for the preparation of a polyester with the repeat unit [-A"-B"] having the formula [-O-R¹-OOC-R²-CO-], comprising the steps:
a) providing a recycled monomer product, where the monomer product contains 50% to 97% by weight of condensation monomer having the formula HO-R¹-OOC-R²-COO-R¹-OH, and 3% to 50% by weight of a substance which is liquid at ambient conditions, wherein said substance is selected from the group consisting of a diol with a melting point below 20°C, water and an inert solvent,
b) adding at least one diacid monomer B having the formula HOOC-R²-COOH to the recycled monomer product of step a), to obtain a monomer slurry,
c) using the monomer slurry from step b) for the polymerization of a polyester with the repeat unit [-A"-B"] having the formula [-O-R¹-OOC-R²-CO-] ,
wherein R¹ and R² are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms,
characterized in that the step of preparing said monomer slurry in step b) is executed in a way that allows maintaining the monomer slurry in liquid form.

The present invention furthermore provides recycled monomer products as they are obtained from depolymerization in a form that allows their efficient use in the preparation of polyesters and therefore create an efficient recycling loop for polyesters. Thus, the present invention further is related to solid particles comprising:
a) recycled monomer product, wherein the recycled monomer product contains 50% to 100% by weight of a condensation monomer having the formula HO-R¹-OOC-R²-COO-R¹-OH,
b) diacid monomer B having the formula HOOC-R²-COOH at a mole ratio of B'' units -OC-R²-CO- to diacid HOOC-R²-COOH in the range of 5:1 to 1:5,
wherein R¹ and R² are the same or different and selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms.

The present invention furthermore provides a (stand-alone) method for providing a recycled monomer product, wherein the monomer product contains 50% to 97% by weight of a condensation monomer having the formula HO-R¹-OOC-R²-COO-R¹-OH, wherein R¹ and R² are as defined above, comprising the steps:
a1) providing a waste stream comprising a polyester with the repeat unit [-A"-B"] having the formula [-O-R¹-OOC-R²-CO-],
a2) forming a blend comprising the waste stream and at least one diol monomer HO-R¹-OH, which is capable of reacting with the polyester,
a3) exposing the blend obtained in step a2) in a reaction vessel to conditions suitable for a depolymerization of the polyester, resulting in a depolymerization solution containing a recycled monomer product, wherein the monomer product contains a condensation monomer having the formula HO-R¹-OOC-R²-COO-R¹-OH,
a4) mixing the depolymerization solution from step a3) with water or an inert solvent to obtain a diluted solution,
a5) cooling the diluted solution from step a4) to a temperature to cause precipitation of the recycled monomer product including the condensation monomer, and
a6) recovering the precipitated recycled monomer product from the solution to obtain a recycled monomer product containing 3 to 50% by weight of a substance which is liquid at ambient conditions, wherein said substance is selected from the group consisting of a diol with a melting point below 20°C, water and an inert solvent,
characterized in that the ratio of the sum of all diol monomers added in step a2) to the polyester repeat units [-A" - B''] contained in the waste stream from step a1) is in the range between 5:1 and 15:1, and the ratio of the diol monomers to the polyester repeat units [-A"-B"] contained in the
depolymerization solution in step a3) is in the range between 4:1 and 14:1, wherein the ratios are molar ratios.

The following designations will be used herein for the condensation polymers, their depolymerization products and their monomers.

**Monomer:** A general term for building blocks of polymers. For condensation polymers, monomers comprise individual monomers, substituted monomers and condensation monomers.

**Individual monomer:** The basic building blocks of the polymer in unreacted form. According to the present invention, monomer A is a diol having the formula HO-R¹-OH and monomer B is a diacid having the general formula HOOC-R²-COOH, wherein R¹ and R² throughout this specification are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms or heterocyclic rings containing 1 to 3 oxygen atoms and 3 to 10 carbon atoms.

**Substituted monomer:** A monomer C obtained as a condensation product of individual monomer B HOOC-R²-COOH with two terminating molecules R³-OH, which will not form a part of the repeat unit of the related condensation polymer, i.e. the terminating molecules will be eliminated during the polycondensation reaction which results in a condensation polymer, and wherein R³ are aliphatic hydrocarbons containing 1 to 15 carbon atoms. According to the present invention, substituted monomer C has the formula R³OOC-R²-COOR₃. In one embodiment, the terminating molecules R³-OH may be methanol, so that the resulting substituted monomer C is H₃COOC-R²-COOCH₃.

**Condensation monomer:** A short condensation product from both individual monomers A and B, with the formula A'-B"-A', wherein A' and B" have the below definitions. More specifically, the condensation monomer A'-B"-A' is HO-R¹-OOC-R²-COO-R¹-OH, wherein R¹ and R² are as defined above.

**Reacted monomer:** A building block of the polymer in reacted form in any larger molecule. Possible forms are A', A", B' and B'', with A' being identical to H'-A" and B' being identical to H'-B" .

According to the present invention
an **A' unit** represents a reacted monomer A which is a diol with 1 reacted end group and one unreacted -OH end group and having the formula HO-R¹-O-;
an **A" unit** represents a reacted monomer A which is a diol with 2 reacted end groups and having the formula -O-R¹-O-,
the **reacted A units** represent the sum of all reacted monomer units A' and A" and
the **total A units** represent the sum of all reacted and unreacted monomer units A, A' and A".

According to the present invention
a **B' unit** represents a reacted monomer B which is a diacid with 1 reacted end group and one unreacted -COOH end group and having the formula HOOC-R²-CO-;
a **B'' unit** represents a reacted monomer B with 2 reacted end groups, preferably a diacid with 2 reacted end groups and having the formula -OC-R²-CO-, wherein
the **reacted B units** represent the sum of all reacted monomer units B' and B" and
the **total B units** represent the sum of all reacted and unreacted monomer units B, B' and B".

For example, the total B units is the total amount of B units in a given product and is the molar sum of all molecules containing a B unit multiplied by the number of B units in the respective molecules. For example, a product containing monomers B and A'-B"-A' as well as dimer A'-B"-A"-B"-A' has a total amount of B units = mol B + 1 * mol A'-B"-A' + 2 * mol A'-B"-A"-B"-A' .

The following terms comprise the listed mole amount per substance:

| | Individual monomer A | Individual monomer B | Monomer A' -B' | Monomer A'-B"-A' | Dimer A'-B"-A"-B"-A' |
|---|---|---|---|---|---|
| Individual monomer A HO-R¹-O-H | 1 | | | | |
| Individual monomer B HOOC-R²-COOH | | 1 | | | |
| A' units HO-R¹-O- | | | 1 | 2 | 2 |
| A" units -O-R¹-O- | | | | | 1 |
| reacted A units (A' + A" ) | | | 1 | 2 | 3 |
| Total A units (A + A' + A" ) | 1 | | 1 | 2 | 3 |
| B' units HOOC-R²-CO- | | | 1 | | |
| B" units -OC-R²-CO- | | | | 1 | 2 |
| reacted B units (B' + B") | | | 1 | 1 | 2 |
| total B units (B + B' + B") | | 1 | 1 | 1 | 2 |

**Repeat unit:** A condensation product from one of each individual monomer A and B. Possible forms are -A"-B"- having the formula [-O-R¹-OOC-R²-CO-], which would provide the repeating structure in the middle of a molecule, or A'-B"- and -B"-A', which would provide the structure at the end of a molecule. A single repeat unit is also present in the condensation monomer A'-B'.

**Dimer:** A condensation product of both individual monomers with two repeat units. Possible forms are A'-B"-A"-B"-A' and B'-A"-B"-A"-B'. The condensation product B'-A"-B"-A"-B' would be considered as a trimer and therefore part of the oligomers.

**Oligomer:** A condensation product of both individual monomers A and B with several repeat units in the general form of E[-A"-B"]ₙ-E, where 3<= n <=9, -A"-B"- has the formula [-O-R¹-OOC-R²-CO-] and E = H', A' or B'.

**Condensation Polymer:** A condensation product of both individual monomers with a large number of repeat units in the general form of E[-A"-B"]ₙ-E, where n >9, -A"-B"- has the formula [-O-R¹-OOC-R²-CO-] and E = H', A' or B'. According to the present invention, the condensation polymer is a polyester.

Polyesters are obtained by a polycondensation reaction with elimination of a low molecular weight reaction product. The polycondensation can be effected directly between the monomers. The polycondensation may also be effected via an intermediate product, which is subsequently reacted by transesterification with elimination of a low molecular weight reaction product, or which is reacted by ring-opening polymerization.

The polyesters thus obtained have a substantially linear polymer chain. It is however possible for a small number of branches to form.

Preferred polyesters according to the present invention are thermoplastic polyesters.

Polyesters are polymers which are usually obtained by polycondensation from a diol component having the general formula HO-R¹-OH and a dicarboxylic acid component having the general formula HOOC-R²-COOH, where R¹ and R² are usually aliphatic hydrocarbons containing 1 to 15 carbon atoms, aromatic hydrocarbons containing 1 to 3 aromatic rings, cyclic hydrocarbons containing 4 to 10 carbon atoms or heterocyclic rings containing 1 to 3 oxygen atoms and 3 to 10 carbon atoms. Typically, linear or cyclic diol components and typically linear, aromatic, or heterocyclic dicarboxylic acid components are used. Instead of the dicarboxylic acid it is also possible to use its corresponding di-esters, typically its dimethyl ester. Preferred examples of such polyesters are polyethylene terephthalate (PET) which is typically obtained from terephthalic acid (TPA) and ethylene glycol (EG), polybutylene terephthalate (PBT) obtained from terephthalic acid (TPA) and 1,4-butylene diol (BD), polytrimethylene terephthalate (PTT) obtained from terephthalic acid (TPA) and 1,3-propane diol (PB), polyethylene furanoate (PEF) obtained from 2,5-furandicarboxylic acid (FDCA) and ethylene glycol (EG), polytrimethylene furanoate (PTF) obtained from 2,5-furandicarboxylic acid (FDCA) and propane diol (PB), polybutylene succinate (PBS) obtained from succinic acid (SA) and butane 1,4-diol (BD), polybutylene adipate (PBA) obtained from adipic acid (AdA) and 1,4-butane diol (BD), polybutylene adipate-terephthalate (PBAT) obtained from adipic acid (AdA) terephthalic acid (TPA) and 1,4-butane diol (BD) and polyethylene naphthalate (PEN) obtained from naphthalene-2,6-dicarboxylic acid and ethylene glycol, where all of the above polyesters may be present in the form of a homopolymer or as copolymers.

The present invention describes a method to prepare polyesters from their monomers, whereas at least one monomer is a recycled monomer product obtained from a polyester. The polyester prepared from said recycled monomer product and the polyester providing the source for the recycled monomer product may be identical or may differ in composition. The differences in composition may result from the use of different monomers and/or from the use of different amounts of common monomers when preparing said polyester. The differences in composition may also result from blends of different polyesters. In accordance with the present invention, at least one common monomer is present in the polyester providing the source of the recycled monomer product, and the polyester prepared form said recycled monomer product.

For example, a PET may be depolymerized using butane diol as a reaction partner, and the resulting recycled monomer product may be re-polymerized to form PBT. Alternatively, a PET copolymer with a high amount of diol comonomers may be depolymerized using ethylene glycol as a reaction partner, and the resulting recycled monomer product may be re-polymerized to form PET with a lower comonomer content.

Polyesters according to the present invention have a general structure comprising repeat units [A"-B"-] specifically having the formula [-O-R¹-OOC-R²-CO-]. These polyesters can be recycled by depolymerization with the addition of a diol monomer A having the formula HO-R¹-OH. The depolymerization results in a recycled monomer product comprising a condensation monomer, which as defined above is in the form of A'-B"-A' and specifically has the formula HO-R¹-OOC-R²-COO-R¹-OH.

The depolymerization can lead to various side products, including a side product with the general structure A'-B' specifically having the formula HO-R¹-OOC-R²-COOH, or diacid monomer B having the formula HOOC-R²-COOH, and partial depolymerization products, including dimers as well as oligomers.

Other variants of the above side products containing comonomers can be formed as well.

According to the present invention, the recycled monomer product comprises at least 50% by weight of said condensation monomer in the form of A'-B"-A' and specifically having the formula HO-R¹-OOC-R²-COO-R¹-OH. Preferably, the dry recycled monomer product comprises at least 50%, more preferably at least 70%, most preferably at least 80% of said condensation monomer, whereas the remainder may be in the form of dimers, oligomers and other side products. In one preferred embodiment the dry recycled monomer product comprises less than 90% of said condensation monomer. This is sufficient to obtain good quality recycled monomer products and at the same time reduces the amount of yield loss due to removal of oligomers and dimers. The percentage is calculated as mole-% based on the total amount of B units. Dry refers to the solid content in the recycled monomer product without any liquids such as residual diol, water or inert solvents.

Also the recycled monomer product comprising at least 50% by weight of said condensation monomer, i.e. the recycled monomer product in a wet state, comprises a remainder in the form of dimers, oligomers and other side products.

In general, all monomer products containing more than 50% by weight of recycled monomer units are considered as recycled monomer products. Water or inert solvents which may optionally be present in the monomer product are not considered for the calculation.

Inert solvents are any liquids which dissolve or disperse at least a portion of a solid substance and do not or at least only to a small degree react with the solid substance at the temperature where the solution or dispersion is formed.

Preferably, monomer products containing more than 70% by weight of recycled monomer units are used in the method of the present invention.

For example, a polyester with the repeat units [A"-B"-] specifically having the formula [-O-R¹-OOC-R²-CO-] may be recycled, using a recycled diol monomer A specifically having the formula HO-R¹-OH for depolymerization, leading to a condensation monomer A'-B"-A' specifically having the formula [HO-R¹-OOC-R²-COOR¹-OH] which is obtained in the presence of water. All monomers units A' HO-R¹-O-) and all monomer units B'' (-OC-R²-CO-) are recycled. For this calculation, the weight of the monomer units A' (HO-R¹-O-) and the weight of the monomer units B'' (-OC-R²-CO-) is added and divided by the weight of the condensation monomer A'-B"-A' [HO-R¹-OOC-R²-COOR¹-OH]. The water is not considered. Monomer A specifically having the formula HO-R¹-OH is considered as recycled if it has been obtained from a polymer or any industrial process during which diol monomer A is formed from chemical substances having a higher molecular weight than monomer A. Recycling includes a case where monomer A is obtained by the polymerization of condensation monomer A'-B"-A' specifically having the formula [HO-R¹-OOC-R²-COOR¹-OH], during which elimination of the diol monomer A occurs, or where ethylene glycol monomer is recycled from a previous process where it had been used as a solvent.

For example, a polyester with the repeat units [A"-B"-] specifically having the formula [-O-R¹-OOC-R²-CO-] may be recycled, using a virgin diol monomer A specifically having the formula HO-R¹-OH for depolymerization, leading to a condensation monomer A'-B"-A' specifically having the formula [HO-R¹-OOC-R²-COOR¹-OH]. In this case, 50% of monomer units A' (HO-R¹-O-) and all monomer units B" (-OC-R²-CO-) are recycled. For this calculation, 50% of the weight of the monomer units A' (HO-R¹-O-) and the weight of the monomer units B" (-OC-R²-CO-) is added and divided by the weight of the condensation monomer A'-B"-A' [HO-R¹-OOC-R²-COOR¹-OH]. For this calculation, atoms that connect the groups A' and B" (specifically the connecting O atoms in the A' group) are divided equally to both units. In case of bis-hydroxyethyl-terephthalate (BHET) obtained from PET and virgin ethylene glycol as monomer A, the recycled content would be 79%.

Also, condensation monomer products in the form of A'-B"-A' specifically having the formula [HO-R¹-OOC-R²-COO-R¹-OH], which are obtained in an amount of more than 50% as a reaction product of a reaction involving recycled monomer A and/or recycled monomer B are considered as recycled monomer products.

For example, a polyester with the repeat units [A"-B"-] specifically having the formula [-O-R¹-OOC-R²-CO-] may be recycled using a monomer X for depolymerization leading to a substituted monomer X'-B"-X'. Reacting substituted monomer X'-B"-X' in a later step with virgin monomer A leads to a condensation monomer A'-B"-A' specifically having the formula [HO-R¹-OOC-R²-COO-R¹-OH]. All monomer units B'' (-OC-R²-CO-) are recycled. For this calculation, the weight of the monomer units B'' (-OC-R²-CO-) is divided by the weight of the condensation monomer A'-B"-A' [HO-R¹-OOC-R²-COO-R¹-OH]. For this calculation, atoms that connect the groups A' and B'' (specifically the connecting O atoms in the A' group) are divided equally to both units. In case of bishydroxyethyl-terephthalate (BHET) obtained from PET and virgin ethylene glycol as monomer A, the recycled content would be 58%. However, if 50% of monomer A is from the depolymerization of the initial polymer, the recycled content is again 79%.

Typically, the condensation monomer is solid at ambient conditions. Ambient conditions refer to normal temperature and pressure (293.15 K, absolute pressure 101.325 kPa). Typical condensation monomers have a melting point above 50°C. More typical is a melting point above 70°C. The melting point is the temperature where the pure condensation monomer melts. The actual temperature for melting the condensation monomer may be lower, as for example the presence of substances which are liquid at ambient conditions may reduce the melting temperature.

According to the present invention, the recycled monomer product is maintained in liquid form during the preparation of the monomer slurry.

A recycled monomer product with a melting temperature above ambient conditions requires heating, and accordingly in the method of the present invention such a recycled monomer product in liquid form is in a molten state. This may be obtained by melting a solid recycled monomer product obtained in a previous manufacturing step, or by supplying the recycled monomer product as a liquid from a previous manufacturing step in which conditions were applied under which the recycled monomer product is in a liquid state. Such a previous manufacturing step preferably comprises a depolymerization step of a polyester.

Such a previous manufacturing step mentioned above may take place in a different location or it may take place in the same location. If the previous manufacturing step takes place in a different location, then the recycled monomer product must be transported. Transporting includes any form where the monomer product is stationary in a transport container which is moved from one location to the other. This includes a transport in bins, containers or tanks.

If the previous manufacturing step takes place in the same location, then the recycled monomer product can preferably be conveyed from one reaction vessel to another. This includes moving by conveyer belts, bucket conveyors, chain conveyors, pneumatic conveying or pumping.

The recycled monomer product can be supplied at any temperature. It can be in solid or molten (i.e. liquid) state. If the recycled monomer product is supplied in solid form, it has to be melted to convert it to a suitable liquid form. The temperature of the recycled monomer product in liquid form is preferably at least 5°C, more preferably 15°C above the melting temperature of the recycled monomer product to prevent unwanted solidification. It is also preferable to keep the recycled monomer product at a temperature below the melting temperature of the polyester to be obtained from the recycled monomer product. As the recycled monomer product is used to prepare a slurry, which is sensitive to thermo-oxidative degradation, it is preferable to maintain the temperature as low as possible.

In one preferred embodiment the temperature of the recycled monomer product in liquid form is supplied at a temperature at or below the melting temperature of the condensation monomer.

According to the present invention, a diacid monomer B having the formula HOOC-R²-COOH is added to the recycled monomer product. The diacid monomer B may be added as a solid, preferably as a powder or fine granules. Typical particle sizes of the diacid monomer B to be used according to the present invention are in the range of 0.1 to 2000 pm, preferably 0.5 to 500 µm, while the median particle size is preferably in the range of 10 to 300 pm, preferably in the range of 30 to 200 pm. The median particle size (also called D₅₀ value) is the particle size from which half of the particles are smaller and half are larger.

Alternatively, a diacid monomer B having the formula HOOC-R²-COOH may be added to the recycled monomer product in a form dispersed in a liquid, like water, diol or an inert solvent. However, the amount of liquid should be limited as water, inert solvents and excessive amounts of diol have to be evaporated before or during subsequent polymerization of the polyester. According to a preferred embodiment of the present invention, the diacid monomer B having the formula HOOC-R²-COOH which is used to prepare the monomer slurry is added without diol or with an amount of diol below the amount of diacid monomer B, preferably below 80% of the amount of diacid monomer B, wherein the calculation is based on the mole amounts of the respective components.

The diacid monomer B having the formula HOOC-R²-COOH should be added to the recycled monomer product in such a way that the recycled monomer product stays above its melting temperature. Therefore, the diacid monomer B is preferably either heated above the melting temperature of the recycled monomer product or, if added at a lower temperature, the recycled monomer product is heated sufficiently to prevent its solidification.

As the diacid monomer B is not soluble or only partially soluble in the recycled monomer product, a slurry is formed where solid particles of diacid monomer B are dispersed in the recycled monomer product. A liquid where the diacid monomer B is reacted with the recycled monomer product and/or the diol monomer A and therefore fully dissolves in the recycled monomer product is not considered a slurry anymore.

The recycled monomer product should be sufficiently agitated to form a homogeneous slurry. The formation of agglomerates should be avoided.

According to the present invention, the amount of added diacid monomer B having the formula HOOC-R²-COOH depends on the amount of B'' units (-OC-R²-CO-) and the amount of diacid monomer B having the formula HOOC-R²-COOH in the recycled monomer product.

The diacid monomer B having the formula HOOC-R²-COOH is preferably added in such a way that after its addition the slurry has a mole ratio of B" units (-OC-R²-CO-) to individual monomer B (HOOC-R²-COOH) in the range of 5:1 to 1:5. The amount of individual monomer B is the sum of individual monomer B in the recycled monomer product and the added individual monomer B. The amount of B" units in the slurry is equal to the B" units in the recycled monomer product.

If only incidental amounts of individual diacid monomer B (<1% by weight) are present in the recycled monomer product, the calculation can be facilitated to be the ratio of B" units in the recycled monomer product to added individual diacid monomer B.

If the ratio of B'' units (-OC-R²-CO-) to individual diacid monomer B (HOOC-R²-COOH) in the slurry is high, then a high amount of individual diol monomer A specifically having the formula HO-R¹-OH has to be evaporated during the preparation of the polyester.

For example, if 5 moles of condensation monomer A'-B"-A' having the formula HO-R¹-OOC-R²-COO-R¹-OH are combined with 1 mole of individual diacid monomer B (HOOC-R²-COOH), the complete polymerization will lead to A'-B"-[A"-B"-]₅-A' specifically having the formula HO-R¹-OOC-R²-CO-[O-R¹-OOC-R²-CO]₅-O-R¹-OH and 3 moles of individual diol monomer A specifically having the formula HO-R¹-OH, and the latter will have to be evaporated during the preparation of the polyester.

If the ratio of B'' units [-OC-R²-CO-] to individual diacid monomer B (HOOC-R²-COOH) in the slurry is lower, then a lower amount of individual diol monomer A specifically having the formula HO-R¹-OH has to be evaporated during the preparation of the polyester. For example, if 4 moles of condensation monomer A'-B"-A' having the formula HO-R¹-OOC-R²-COO-R¹-OH are combined with 2 mole of individual diacid monomer B (HOOC-R²-COOH), the complete polymerization will lead to A'-B"-[A"-B"-]₅-A' specifically having the formula HO-R¹-OOC-R²-CO- [O-R¹-OOC-R²-CO]₅-O-R¹-OH, and only 1 mole of individual diol monomer A specifically having the formula HO-R¹-OH, and the latter will have to be evaporated during the preparation of the polyester. As less individual monomer A has to be evaporated, less energy is consumed in the polymerization process. Therefore, it is advantageous to keep the mole ratio of B" units (-OC-R²-CO-) to individual monomer B (HOOC-R²-COOH) in the slurry below 4:1, preferably below 3:1 and more preferably below 2:1.

If the ratio of B'' units (-OC-R²-CO-) to individual monomer B (HOOC-R²-COOH) is low, then a low amount of recycled condensation monomer A'-B"-A' having the formula HO-R¹-OOC-R²-COO-R¹-OH is used for the preparation of the polyester.

For example, if 1 mole of condensation monomer A'-B"-A' having the formula HO-R¹-OOC-R²-COO-R¹-OH is combined with 5 moles of individual diacid monomer B (HOOC-R²-COOH), the complete polymerization will lead to A'-B"-[A"-B"-]₅-A' specifically having the formula HO-R¹-OOC-R²-CO- [O-R¹-OOC-R²-CO]₅-O-R¹-OH. This requires 5 moles of individual diol monomer A specifically having the formula HO-R¹-OH to be added and leads to a polymer where only 1/6 of the B'' units (-OC-R²-CO-) are from the recycled monomer product. If the ratio of B" units (-OC-R²-CO-) to individual monomer B (HOOC-R²-COOH) is higher, then a higher amount of recycled condensation monomer A'-B"-A' having the formula HO-R¹-OOC-R²-COO-R¹-OH is used for the preparation of the polyester.

For example, if 2 moles of condensation monomer A'-B"-A' having the formula HO-R¹-OOC-R²-COO-R¹-OH are combined with 4 mole of individual diacid monomer B (HOOC-R²-COOH), the complete polymerization will lead to A'-B"-[A"-B"-]₅-A' specifically having the formula HO-R¹-OOC-R²-CO-[O-R¹-OOC-R²-CO]₅-O-R¹-OH. This requires only 3 moles of individual diol monomer A specifically having the formula HO-R¹-OH to be added and leads to a polymer where 1/3 of the B'' units (-OC-R²-CO-) are from the recycled monomer product. Therefore, it is advantageous to keep the mole ratio of B'' units (-OC-R²-CO-) to individual monomer B (HOOC-R²-COOH) in the slurry above 1:4 (i.e. the ratio should not become smaller than 0.25), preferably above 1:3 and more preferably above 1:2.

As seen from above calculations and according to one embodiment the present invention, it may be necessary to prepare the slurry in a way that the slurry contains individual diol monomer A specifically having the formula HO-R¹-OH. Individual diol monomer A may already be present in the recycled monomer product. Individual diol monomer A may also be added to the recycled monomer product before or after the addition of individual diacid monomer B (HOOC-R²-COOH). Optionally, individual diol monomer A may be added to the recycled monomer product together with individual diacid monomer B. The amount of added individual diol monomer A should be limited to limit required evaporation of individual diol monomer A in the subsequent polymerization reaction. While a small amount of evaporation of individual diol monomer A is an integral part of polymerization processes, excessive amounts of such evaporation should be avoided to minimize energy consumption.

According to a preferred embodiment of the present invention, the required amount of individual diol monomer A specifically having the formula HO-R¹-OH depends on the amount of B'' units (-OC-R²-CO-) and the amount of individual diacid monomer B (HOOC-R²-COOH) in the slurry. The required amount of individual diol monomer A specifically having the formula HO-R¹-OH is between a minimum value Aₘᵢₙ and a maximum value Aₘₐₓ,
where Aₘᵢₙ = 1.05 * diacid - 0.95 * B" units and
Aₘᵢₙ >= 0
and Aₘₐₓ = 1.75 * diacid - 0.25 * B" units
where individual diol, Aₘᵢₙ, Aₘₐₓ, B" units and diacid are expressed in mole amounts.

The lower limit for Aₘᵢₙ is 0. In this case sufficient condensation monomer A'-B"-A' having the formula HO-R¹-OOC-R²-COO-R¹-OH is present to supply all the required amount of reacted A units (A' and A").

The upper limit for Aₘₐₓ is achieved with a mole ratio of B" units (-OC-R²-CO-) to diacid monomer B (HOOC-R²-COOH) of 1:5 at 8.5 moles monomer A per 6 moles of total B units.

A more preferable value for Aₘₐₓ is 6.5 moles individual monomer A (HO-R¹-OH) per 6 moles of total B units. This more preferable upper limit for Aₘₐₓ is achieved with a mole ratio of B" units (-OC-R²-CO-) to individual monomer B (HOOC-R²-COOH) of 1:2 or above that.

Further preferred is Aₘₐₓ = 1.5 * individual monomer B (HOOC-R²-COOH) - 0.5 * B" units (-OC-R²-CO-)

This leads to an upper limit for Aₘₐₓ with a mole ratio of B" units (-OC-R²-CO-) to individual monomer B (HOOC-R²-COOH) of 1:5 at 7 moles individual monomer A (HO-R¹-OH) per 6 moles of total B units.

Most preferred is an upper limit for Aₘₐₓ of 0.8 mole individual monomer A (HO-R¹-OH) per 1 mole of total B units.

According to the present invention, the monomer slurry described above is used for the polymerization of a polyester.

The preparation of polyesters has been well described. Various methods for the preparation of polyesters are described in "Modern Polyesters; Wiley Series in polymer Science; 2003; Edited by John Scheirs" (typical examples in chapters 2, 8, 9 and 11).

Typical preparation processes comprise the direct reaction of equal amounts of individual monomers A and B, leading to polyesters with the repeat unit structure [A"-B"-]ₙ specifically having the formula [-O-R¹-OOC-R²-CO-]ₙ which may be terminated by either A' (HO-R¹-O-) and/or B' units (-OC-R²-COOH). During the reaction, low molecular weight reaction products may form which have to be removed by evaporation.

Other, so called two step, processes use individual monomer B (HOOC-R²-COOH) and an excess of individual monomer A (HO-R¹-OH) in a first step to form a prepolymer with the repeat unit structure [A"-B"-]ₙ specifically having the formula [-O-R¹-OOC-R²-CO-]ₙ, where n is a small number of preferably less than 20 and which is mostly terminated by A' units (HO-R¹-O-). During the reaction, low molecular weight reaction products may form, which have to be removed by evaporation.

In a second step, the prepolymer continues to react leading to polyesters with the repeat unit structure [A"-B"-]ₙ specifically having the formula [-O-R¹-OOC-R²-CO-]ₙ, which may be terminated by either A' (HO-R¹-O-) and/or B' units(-OC-R²-COOH). Excess individual monomer A (HO-R¹-OH) is removed by evaporation during the second stage.

An alternative option of the two step processes uses substituted monomer C and an excess of individual monomer A (HO-R¹-OH) to form a prepolymer the repeat unit structure [A"-B"-]ₙ specifically having the formula [-O-R¹-OOC-R²-CO-]ₙ, where n is a small number of preferably less than 20 and which is mostly terminated by A' units (HO-R¹-O-). During the reaction, low molecular weight reaction products may form which have to be removed by evaporation. In a second step, the prepolymer continues to react leading to polyesters with the repeat unit structure [A"-B"-]ₙ specifically having the formula [-O-R¹-OOC-R²-CO-]ₙ, which may be terminated by either A' (HO-R¹-O-) and/or B' units (-OC-R²-COOH). Excess individual monomer A (HO-R¹-OH) is removed by evaporation during the second stage.

Many polyesters have at least one individual monomer A or B which is a liquid at ambient conditions. Typically, the diol, individual monomer A (HO-R¹-OH), is a liquid. This allows to feed the individual monomers as a liquid to the polyester polymerization. If one monomer is liquid and a second monomer is solid, the solid monomer may be dispersed in the liquid monomer, forming a slurry of individual monomers, which is fed to the polyester polymerization.

A conventional plant designed to prepare a polyester from its individual monomers A and B therefore comprises a unit configured to prepare a slurry from individual monomers A and B. This slurry preparation unit has associated supply units which allow providing individual monomer A in liquid form and individual monomer B in solid form. The resulting slurry is then fed to the subsequent step of polyester polymerization.

It is therefore desirable to also provide the monomer slurry of the present invention in liquid form to the polyester polymerization. However, in contrast to conventional plants, feeding the monomer slurry of the present invention requires more heating to obtain and/or maintain the monomer slurry in liquid form. At a minimum, the monomer slurry has to be maintained at a temperature above the melting temperature of the recycled monomer product, which contains the condensation monomer having the formula HO-R¹-OOC-R²-COO-R¹-OH. Typically, the monomer slurry should be at a temperature at or above 70°C up to 200°C, preferably at or above 90°C, more preferably at or above 105°C, preferably below 160°C and more preferably below 140°C when feeding to polyester polymerization. Most preferably, the monomer slurry is above the melting point of the condensation monomer having the formula HO-R¹-OOC-R²-COO-R¹-OH when feeding the slurry to polyester polymerization.

Therefore, it is preferable to maintain the unit for the preparation of the slurry at a temperature at or above 70°C up to 200°C, preferably at or above 90°C, more preferably at or above 105°C, preferably below 160°C and more preferably below 140°C. It is most preferable to maintain the unit above the melting point of the condensation monomer having the formula HO-R¹-OOC-R²-COO-R¹-OH.

To maintain that required temperature, the unit for the preparation of the slurry is equipped with heating means, which are sufficient to maintain a temperature at or above 70°C up to 200°C, preferably at or above 90°C, more preferably at or above 105°C, preferably below 160°C and more preferably below 140°C. Most preferably, the heating means are sufficient to maintain a temperature above the melting point of the condensation monomer having the formula HO-R¹-OOC-R²-COO-R¹-OH.

In contrast to conventional plants, a supply unit is required which allows to feed recycled monomer product either in solid form at a temperature below its melting temperature or at a temperature sufficient for the recycled monomer product to be supplied in molten form, which requires temperatures at or above 70°C up to 200°C, preferably at or above 90°C, more preferably at or above 105°C.

The supply unit for solid recycled monomer product may be any unit that allows providing solid recycled monomer product in controlled amounts, while maintaining the recycled monomer product in solid form. Examples are screws, rotary airlocks, chain conveyors or pneumatic conveying systems.

The supply unit for liquid recycled monomer product may be any unit that allows providing liquid recycled monomer product in controlled amounts, while maintaining the recycled monomer product in liquid form. Examples are extruders, pumps or vessels with outlet valves that control the downflow from a vessel. Preferably, the supply unit is at the same time equipped with incorporated or downstream heating means to melt the monomer product.

As indicated above, the recycled monomer product may be solid at ambient conditions. In a preferred embodiment of the present invention, the slurry preparation unit of a plant designed to prepare a polyester is executed in a way that allows to melt the monomer product and to maintain the monomer product in molten state while the monomer slurry is formed.

Alternatively, a supply unit is provided that provides the recycled monomer product in molten state. In this case, the slurry preparation unit of a plant designed to prepare a polyester is executed in a way that allows maintaining the recycled monomer product in molten state while the monomer slurry is formed.

In a further preferred embodiment of the present invention, the monomer slurry of the present invention may be added as a solid to the slurry preparation unit. In this case, the monomer slurry is solidified before addition to the polyester preparation unit. Such intermediate solidification may be desirable if the slurry has to be stored or transported to a different location.

In this embodiment of the present invention, the slurry preparation unit of a plant designed to prepare a polyester is executed in a way that allows to melt the monomer slurry and to maintain the monomer slurry in molten state.

According to the present invention, the monomer slurry may contain water and/or inert solvent in the range of 2% to 40% by weight, based on the entire amount of the slurry. It is preferred according to the present invention to evaporate at least a portion of the water and/or inert solvent. Therefore, the slurry preparation unit is executed in a way that allows maintaining the monomer slurry in molten state while evaporating at least a portion of the water and/or inert solvent.

The monomer slurry may contain additives such as catalysts, colorants, anti-oxidants, stabilizers or inorganic fillers. These additives may be added during the production of the recycled monomer product. These additives may also be added to the stream of recycled monomer product or to the stream of diacid monomer B (HOOC-R²-COOH) entering the slurry preparation unit. Alternatively, the additives may also be added to the slurry. The additives may be added in pure form, as a blend of additives or together with a liquid. Typically, such additives are dissolved or dispersed in individual monomer A (HO-R¹-OH).

After slurry preparation, the polymerization process of the polyester commences identical or at least very similar to processes known from virgin polymer polymerization. Small differences may result from different mole ratios which influence the evaporation of volatile components. Other differences may result from different (typically higher) feed temperatures of the monomer slurry. Especially when high amounts of condensation monomer A'-B"-A having the formula HO-R¹-OOC-R²-COO-R¹-OH are introduced, the first step of the reaction is facilitated leading to shorter residence times, lower amounts of evaporating reaction products, the possibility to reduce reaction pressure and consequently the possibility to obtain higher production rates.

According to a preferred embodiment of the present invention, the recycled monomer product is obtained by depolymerization of a polyester. According to a preferred embodiment of the present invention, obtaining the recycled monomer product comprises the steps:
a1) providing a waste stream comprising a polyester with the repeat unit [-A"-B"] having the formula [-O-R¹-OOC-R²-CO-],
a2) forming a blend comprising the waste stream and at least one diol monomer HO-R¹-OH or terminating molecule R³-OH wherein R³ is an aliphatic hydrocarbon group containing 1 to 15 carbon atoms, which is capable of reacting with the polyester,
a3) exposing the blend obtained in step a2) in a reaction vessel to conditions suitable for a depolymerization of the polyester resulting in a depolymerization solution containing a recycled monomer product, where the monomer product contains a condensation monomer having the formula HO-R1-OOC-R2-COO-R1-OH,
a4) mixing the depolymerization solution from step a3) with water or an inert solvent to obtain a diluted solution
a5) cooling the solution from step a4) to a temperature to cause precipitation of the recycled monomer product including the condensation monomer and
a6) recovering the precipitated recycled monomer product from the solution to obtain a recycled monomer product containing 3% to 50% by weight of substance which is liquid at ambient conditions, wherein said substance is selected from the group consisting of a diol with a melting point below 20°C, water and an inert solvent.

The waste stream of step a1) may be any stream which predominantly comprises polyester. It may further contain contaminants. The contaminants include solid substances which are mixed with the polyester particles. Typical are metal, paper or foreign plastic. The contaminants include solid or liquid substances adhering to the surface of the polyester particles. Typical are residues from a prior use, like sugar or edible oil, or from cross contamination during collection sorting and pre-cleaning, like sand, stones or washing chemicals. The contaminants further include substances inside the polyester particles. Typical are absorbed volatile substances from previous use, like aroma substances, household chemicals or solvents. Typical are also mixed contaminants, like additives such as colorants, inorganic fillers or organic additive carriers. Typical are also mixed contaminants, like different polymers in polymer blends or blends with natural fibers such as cotton. The contaminants also include water and organic substances which adhere to the surface of the waste particles or which are absorbed by the waste particles. Such liquids may be removed by a pre-drying step. It is however preferred to avoid such a drying step and provide the waste stream including the liquid.

The waste stream may result from post-industrial or post-consumer waste. Such waste may be in the form of articles, like containers or fabrics, or it may be in the form of intermediate products like sheets, fiber rolls or preforms for containers, or it may be in the form of raw materials like pellets or shredded solidified melt. The waste stream may have undergone pre-cleaning steps like optical sorting or separation by mechanical means such as density separation or screening to remove foreign polymers, and non-polymeric substances.

The waste stream may have undergone pre-cleaning steps like washing with hot or cold water optionally containing caustic substances and/or detergents to remove surface contaminants.

The waste stream may have undergone pre-cleaning steps like drying at elevated temperatures to remove moisture and/or volatile organic contaminants.

The waste stream may be cut into particles or it may be in the form of dust or powder. Typical particle sizes are in the range of 0.1mm up to several centimeters. For ease of handling particles above 1mm are preferred and to prevent none dissolved particles to block pipes a size below 5cm especially below 3cm is preferred.

According to a preferred embodiment of the present invention the waste stream may comprise liquifying contaminant. Liquifying contaminant is defined as substances which are solid at room temperature but liquid and not soluble in the depolymerization solution formed in step a3) under the conditions of step a3). Liquifying contaminant may be present at a concentration of 0.1% to 48% by weight, based on the entire amount of the waste stream. The meaning of not soluble refers to any part of a substance which is, given its amount, not dissolved. Minor portions which go into solution are not considered.

According to a preferred embodiment of the present invention the waste stream may comprise solid contaminant. Solid contaminant is defined as substances which are solid and not soluble in the depolymerization solution formed in step a3) under the conditions of step a3). Solid contaminant may be present at a concentration of 0.1% to 48% by weight, based on the entire amount of the waste stream. The meaning of not soluble refers to any part of a substance which is, given its amount, not dissolved. Minor portions which go into solution are not considered. According to the present invention the overall content of polyester is above 50%. The use of the preferred embodiment is most suitable if the content of liquifying plus solid contaminant is at a concentration above 1%, more preferred above 2% and most preferably above 5%.

Waste streams with high amounts of liquifying contaminant are for example polyester sheet with a polyolefin layer or a silicone release layer or polyester containers with polyolefin-based barrier layer such as EVOH.

Waste streams with high amounts of solid contaminant are for example polyester fibers mixed with non-melting fiber material like cotton. Other sources of polyester waste streams with high contaminant levels are mixed fraction which may result from cleaning steps in polymer sorting or washing facilities.

Forming the blend in step a2) comprises any form of mixing and mixing devices that can be used to mix a typically solid or liquid waste stream and a typically liquid diol monomer. Alternatively, it comprises any form of mixing and mixing devices that can be used to mix a typically solid waste stream and a solid diol monomer. In both cases heating may be applied to facilitate the formation of the blend. Typically, the waste stream is supplied to the mixing device in a controlled amount. This may include any gravimetric or volumetric dosing device, such as loss in weight feeders, belt scales or an air lock. The supply of the waste stream in solid form may comprise pneumatic conveying, screw conveying, belt conveying and/or gravimetric feed. An extruder with or without a dosing pump and or a melt filter may be used to supply the waste stream in liquid form. In this case it is preferable to supply the liquid waste stream at a position to the mixing device which is below the fill level of the waste stream to promote immediate contact between the waste stream and the diol. Preferably the supply of the liquid waste stream occurs through multiple openings with provides a large surface contact area between the waste stream and the diol monomer. This is especially important if the melting point of the liquid waste stream is above the boiling temperature of the diol monomer.

According to the present invention at least one diol monomer HO-R1-OH, which is capable of reacting with the polyester is used.

Typically, only one diol monomer is used. The use of different diol monomers will result in a mixed recycled depolymerization product, which may only be useful for special co-polyesters. Nevertheless, any diol monomer may contain small amounts of impurities, like dimers thereof. Typically, the diol monomer is supplied to the mixing device in a controlled amount. This may include any gravimetric or volumetric dosing device. Alternatively, a weight or volume difference from a supply tank is used. Typically, the diol monomer is supplied in liquid form through a pump.

The ratio of the solid waste stream and the diol monomer has a significant impact on the final composition of the recycled monomer product after depolymerization but also the economics of the recycling process. In a preferred embodiment the ratio of the sum of all diol monomers added in step a2) to the polyester repeat units contained in the waste stream from step a1) is in the range between 5:1 and 15: 1, wherein the ratio is a molar ratio.

The blend may further comprise a catalyst to facilitate the subsequent depolymerization reaction. Such a catalyst may be in the form of a metal salt or in the form of an organic substance. Also, organic metal complexes can be used. The catalyst may be added in solid or liquid form as a pure substance or in solution. When a solution is used the diol monomer is the most suitable solvent. Forming the blend may be accomplished in continuous fashion or by preparing individual batches.

One option is to use an agitated vessel to form the blend. Depending on the ratio of liquid to solid and the bulk density of the solids the solids may not be fully submerged in the liquid. In that case forming the blend may require some depolymerization and partial dissolution of solids in the liquid before a homogeneous blend is formed. In that case step a2) and a3) overlap. The steps a2) and a3) also overlap in a continuous process where diol monomer and the waste stream are supplied to depolymerization reactor in which depolymerization is already ongoing. Such a procedure is explained in US4609680.

Another option is to use an extruder to melt the polyester and mix it with a diol monomer.

Step a3) comprises the depolymerization of the blend obtained in step a2). The conditions suitable for depolymerization of the polyester in the waste stream are well known in the industry. As an example, various methods for the depolymerization of PET are described in "Recycling of Polyethylene Terephthalate Bottles; Elsevier; 1st ed. 2018, Edited by Sabu Thomas". According to the present invention, depolymerization conditions must be sufficient to obtain a monomer product which predominantly consists of a condensation monomer with the structure A'-B"-A' having the formula HO-R¹-OOC-R²-COO-R¹-OH.

As indicated before, the mixing of step a2) and the depolymerization of step a3) may overlap as depolymerization may already start during mixing. In one preferred embodiment, hot diol monomer is mixed with the waste stream to preheat the waste stream to a temperature sufficient to initiate depolymerization. A suitable temperature is typically above 130°C and at least 20°C below the boiling temperature of the diol monomer. In any case the final level of depolymerization is obtained in step a3). Depolymerization occurs in a reaction vessel. One option is to use an agitated vessel for depolymerization. In a batch process, this may be the same vessel as has been used in step a2). In a continuous process, a separate agitated vessel or a series of agitated vessels is preferred. Alternatively, a pipe reactor may be used instead of one or several of the agitated vessels. Typically, the reaction vessel comprises heating means, such as mantle heating, internal heating coils or an external heat exchanger through which a part of the depolymerization solution is pumped and returned to the vessel.

The vessel is heated to conditions suitable for the depolymerization of the polyester. Typically, a temperature of 170°C has to be exceeded to reach sufficient depolymerization. Preferably the temperature is raised up to the boiling temperature of the diol monomer. The diol monomer may contain other liquids. As a consequence, the boiling temperature may be below the boiling temperature of the diol monomer. As the other liquids evaporate from the depolymerization solution, the boiling temperature increases. As recycled monomer product is formed and dissolved in the diol monomer, the boiling temperature of the diol monomer increases above its initial boiling temperature. Preferably sufficient heating is provided to maintain boiling. The reaction vessel is typically operated with a pressure range of 500mbar to 5bar. It is however preferred to operate the reaction vessel at approximately atmospheric pressure in the range of 1bar ± 100mbar. Especially preferred is to operate the reaction vessel a slight overpressure, up to 100mbar, to allow the transfer of evaporated liquids to subsequent process steps. The pressures refer to absolute pressure if not noted differently.

In a series of reaction vessels, temperature and pressure can change from one vessel to the next. Especially if an extruder is used in step a2), higher temperatures and pressures may be initially used. However, according to the present invention such an extruded blend would be subsequently transferred to a reactor within the above-mentioned specifications.

A preferred series of reactors uses a first reactor at approximately atmospheric pressure at the boiling point of the solution, a second reactor at an overpressure of up to 5 bar at a temperature higher than the first reactor and a third reactor at a pressure below the second reactor, preferably at approximately atmospheric pressure. This series allows to depolymerize in the first reactor while simultaneously removing volatile contaminants. It then allows to increase depolymerization speed in the second reactor and it allows to evaporate some of the diol monomer from the third reactor.

The depolymerization is continued until a depolymerization solution has formed. Except for some contaminants the waste stream should be fully dissolved in the depolymerization solution. Long reaction times at high temperature should be avoided as this causes the formation of side products, like the formation of dimers of the diol monomer. The residence time for the steps a2) and a3) together is typically in the range of 20 minutes to 6 hours. In cases of step a3) occurring at approximately ambient pressure with boiling diol monomer, residence times in the range of 1 to 5 hours are preferred. In cases where the waste stream is preheated as described above, residence times including such preheating may reach up to 24 hours.

The depolymerization solution contains a recycled monomer product, where the monomer product contains a condensation monomer having the formula HO-R1-OOC-R2-COO-R1-OH.

In step a4) the depolymerization solution from step a3) is mixed with water or an inert solvent to obtain a diluted solution. Any mixing apparatus suitable to mix two different liquids may be used. In a batch process, this may be the same vessel as has been used in step a3). In a continuous process, a separate apparatus is preferred. The amount of water or inert solvent compared to the amount of diol monomer is in the range between 5:1 and 1:3. Preferred is a mixing ratio below 3:1. Preferred is a mixing ratio above 1:1.5. The mixing ratio is expressed as volume ratio, based on the diol monomer amount in the depolymerization solution at the beginning of the water addition. Most preferred is a water addition which is equal to or exceeds the amount of diol monomer which was added into step a2). The mixing may comprise adding all water or inert solvent at one position into the full amount of the depolymerization solution. The mixing may also involve sequentially adding parts of the water or inert solvent at different positions. The mixing may comprise adding all water or inert solvent into only a part of the depolymerization solution and a subsequent mixing with the rest of the depolymerization solution. In any case where the distinction can be made, especially in batch processes, it is preferred to add water or inert solvent into the depolymerization solution and not to add the depolymerization solution into the water or inert solvent. This prevents an initial super cooling of parts of the depolymerization solution.

In a preferred embodiment the flows and the temperatures of the two liquid streams should be adjusted before mixing in such a way that without the need for evaporation the resulting diluted solution reaches a temperature below its boiling point but above a temperature at which precipitation of the condensation monomer would start. In case of a depolymerization solution resulting from polyethylene terephthalate and ethylene glycol, a temperature of the diluted solution above 60°C and below 110°C is preferred. More preferred is a temperature above 70°C and below 100°C. During the mixing process some vapor of water or inert solvent may form. Typically, these vapors are condensed and returned to the diluted solution of transferred to a solvent recovery unit.

In general, any shock cooling should be prevented. Nevertheless, it is also necessary to prevent the formation of excessive amounts of a side product with the general structure A'-B' specifically having the formula HO-R¹-OOC-R²-COOH. This requires quick cooling below 90°C. It is therefore preferred that the water addition is performed in such a way that the solution reaches a temperature below 90°C within 1 hour after the beginning of the water addition. Preferably the solution reaches a temperature below 90°C within 30 minutes.

In a preferred embodiment of the present invention the water addition is performed in such a way that the solution is present in an agitated vessel and the water is added in multiple positions into the vessel.

In another a preferred embodiment the water addition is performed in such a way that the solution flows through a pipe and the water is injected into the pipe.

The diluted solution from step a4) is cooled in step a5). Any cooling apparatus suitable to cool a liquid and initiate precipitation of a dissolved solid may be used. Typically, an agitated vessel would be used. Typically, the vessel comprises cooling means, such as mantle cooling, internal cooling coils or an external heat exchanger through which a part of the diluted solution is pumped and returned to the vessel. Alternatively, at least a part of the cooling may occur in a plate or pipe heat exchanger. Cooling must be sufficient to cause precipitation the majority of dissolved monomer product and especially the contained condensation monomer. However, cooling must maintain the diluted solution in liquid form. Therefore, cooling is limited to the melting temperature of the diluted solution. In the presence of water-cooling temperatures between 0°C and 25°C, preferred below 15°C and more preferred below 10°C are used. The cooling time must be long enough to allow to cause precipitation of the majority of dissolved monomer product. As the cooling rate is an important factor in the development of the crystal size of the precipitating solids, longer cooling times are preferred to achieve easy to filter solid particles. Typical cooling times are in the range between 1 to 16 hours. Cooling may occur by a constant temperature ramp, by a stepwise temperature ramp or by a temperature ramp followed by a holding time. It is preferred to use agitation during cooling to prevent the formation of large gel-like blocks. The agitation must be strong enough to reach the entire liquid volume throughout the cooling process. At the same time high friction should be avoided to prevent the breakage of precipitated solids. Typical agitators are bled stirrers or cup stirrers. At least 80%, preferably at least 90% of the precipitated solids (measured by weight) should have a particle size above 20pm.

The precipitated solids, comprising the recycled monomer product, from step a5) are separated from the solution in step a6) by any method suitable for a mechanical solid liquid separation. This includes filtration, sedimentation or centrifugation. It does not include thermal methods where the solution is fully evaporated. The advantage of a mechanical separation is the removal of contaminants which are soluble in the solution and therefore separated from the precipitated solids. Typical suitable filtration equipment includes, filter presses, belt filters, or rotating drum filters. The separation may be performed in batch or in continuous mode. Where no suitable continuous equipment is available, alternating batch systems will be used. Following the separation two material fractions are obtained, a solid recycled monomer product, containing the condensation monomer, and a liquid solution. The solution includes diol monomer, water and/or inert solvent as well as contaminants, residual catalyst and soluble components from the polyester depolymerization, such as condensation monomer, dimers, oligomers and other side products of the depolymerization.

Some residual solution remains in the recycled monomer product, which is considered a wet solid. The liquid content in the wet solid is typically in the range of between 50% and 200% based on the dry solid weight. Due to the unwanted substances in the liquid it is desirable to remove the liquid by mechanical means. Again, a thermal separation by evaporation would result in dissolved substances remaining in the recycled monomer product. This separation may include technologies for purging with an air flow, liquid removal by compression or liquid exchange due to washing. Such technologies may be combined and repeated in multiple sequences. It is especially desirable to wash the solids multiple times, followed by at least one purging stage. As a washing liquid a diol monomer, water or an inert solvent may be used. As each subsequent washing stage creates a liquid stream of higher purity the liquid stream from one stage may be used in a previous washing stage as washing liquid.

In a preferred embodiment, the following sequence is used to clean the obtained wet solid:
- the wet solid of the recycled monomer product is placed on a filtration device;
- at least two washing steps with water are subsequently carried out in such a way that fresh water is used in a step which is not the first washing step and water filtrate from that fresh water washing step is used as a washing solution in a previous washing step;
- at least a first air purging step is used after the fresh water washing step;
- optionally a washing step with diol monomer A after the washing steps with water and before or after the first air purging step can be used;
- optionally a second air purging step is used after the washing step with diol monomer A.

The above procedure has the advantage that a minimal amount of water is used, which reduces the amount of water which has to be recovered.

In another preferred embodiment the following sequence is used to clean the obtained wet solid:
- the wet solid of the recycled monomer product is placed on a filtration device;
- at least two washing steps with diol monomer A are subsequently carried out in such a way that fresh diol monomer is used in a step which is not the first washing step and diol monomer filtrate from that fresh diol monomer washing step is used as a washing solution in a previous washing step:
- at least a first air purging step is used after the fresh diol monomer washing step.

The embodiments with the diol monomer further reduce the used water amount and reduce by displacement the amount of water which has to be removed from the recycled monomer product by evaporation.

They are specifically advantageous when solid particles are made from the recycled monomer product, where a lower agglomeration risk during storage exists with the diol monomer compared to water.

The so-called air purging steps may be executed with other gases like nitrogen or CO₂ if special requirements regarding heat capacity or inertness exist.

Several additional cleaning steps may be used in the preparation of the recycled monomer product.

These cleaning steps may be applied both in step a) of the method for the preparation of a polyester according to the present invention, as well as in the stand-alone method for providing a recycled monomer product according to the present invention.

These cleaning steps may be operated in sequence or partially combined. They include:
- evaporation of volatile contaminants from any material stream of any of steps a1) to a6), especially from step a3). This requires directing the vapor away from a step where evaporation takes place. Optionally a part of the vapor is condensed and returned to the process step. The term "material stream" involves all materials that are used, generated or processed in any of steps a1) to a6), including the waste stream of step a1), the blend formed from the waste stream of a1) and an added diol monomer in step a2), the depolymerization solution obtained in step a3) from said blend, the diluted solution obtained in step a4) from mixing the depolymerization solution with water or an inert solvent, as well as the precipitated recycled monomer product obtained in step a5).
- mechanical separation, such as filtration, of solid contaminants from any solution obtained in any of the steps a3) to a5). This may be done in one or in multiple steps. Separation includes filtration, which may comprise a first straining step with a screen size between 0.1 to 3mm and a second fine filtration with a pores size between 0.1µm and 0.1mm.
- mechanical separation, such as filtration, of precipitated oligomer particles from any solution obtained in any of the steps a3) to a5). This is preferably done after the step a4) at a temperature which allows precipitation of oligomers, but allows to maintain the majority of the dimer and the condensation monomer in solution. Filter aids may be used to facilitate the filtration.
- mechanical separation, such as filtration, of precipitated dimer particles from any solution obtained in any of the steps a3) to a5). This is preferably done after the step a4) at a temperature which allows precipitation of dimers, but allows to maintain the majority of the condensation monomer in solution. Filter aids may be used to facilitate the filtration. Such a procedure for the specific separation of a dimer is explained in WO 2021/032821.
   According to a preferred embodiment, the mechanical separation of oligomers and or dimers is limited in such a way that the amount of oligomers and dimers remaining in solution comprise more than 10% and preferably less than 20% of the solid weight. This can be achieved by setting the temperature for precipitation high enough to keep some oligomer and dimer in solution. Alternatively, this can be achieved by limiting the mechanical separation, for example by a large enough screen size, allowing small particles to pass. This second option leaves nucleates in the solution which is advantageous in the subsequent crystallization or the condensation monomer.
- removal of colorants and other high boiling organic contaminants by the use of activated carbon and the subsequent separation of the activated carbon from any solution obtained in any of the steps a3) to a5). Active carbon may be mixed in powder or granular form with the solution and subsequently filtered, or it may be used as a packed bed, where the solution is passed through. Filter aids may be used to facilitate the filtration. The cleaning step using active carbon can also be used after redissolution of the recycled monomer product. A procedure for color removal with activated carbon is explained in US-6,642,350 and US-2006/074136.
- removal of metals by the use of ion exchangers and the subsequent separation of the ion exchangers from any solution obtained in any of the steps a3) to a5). Ion exchangers may be mixed in powder or granular form with the solution and subsequently filtered or they may be used as a packed bed, where the solution is passed through. Filter aids may be used to facilitate the filtration. The cleaning step using ion exchangers can also be used after redissolution of the recycled monomer product. An ion exchange procedure is explained in US,6,642,350 and US,6,630,601.
- redissolution of the obtained recycled monomer product in a diol monomer, water of an inert solvent or a mixture thereof, and a subsequent precipitation of the recycled monomer product and mechanical separation from the solution.
- purging and/or washing of the filter cake obtained in step a6) with air, water, individual monomer and/or an inert solvent.

The above-mentioned cleaning steps may be combined. For example, oligomer removal, active carbon removal and/or removal of the ion exchangers may be combined into one separation step.

According to a preferred embodiment of the present invention, after completion of the depolymerization and cleaning steps a recycled monomer product is obtained which contains 3% to 50% by weight of a substance which is liquid at ambient conditions wherein said substance is selected from the group consisting of a diol with a melting point below 20°C, water and an inert solvent. Preferably, said substance which is liquid at ambient conditions is selected from the group consisting of a diol with a melting point below 20°C, and water.

Diol monomer, water and inert solvent may be collected from any of the above-mentioned steps. Those streams may be in liquid or in gaseous form. The streams typically contain other substances such as contaminants, residual catalyst and soluble components from the polyester depolymerization, such as condensation monomer, dimers, oligomers and other side products of the depolymerization.

It is desirable to recover individual purified liquid streams for reuse in any of the steps a1) to a6). Typical methods for the recovery of the liquids are membrane filtration or distillation.

According to a preferred embodiment of the present invention, the blend in step a2) contains between 2 and 10% by weight of water, and at least 15% but not more than 60% by weight of the diol monomer are evaporated and removed during step a3).

The meaning of "removed" provides that the evaporated stream is directed away from a step in which the evaporation occurred. This excludes a liquid return from a reflux cooler. In a batch process the contained mass reduces as a result of the evaporation. In a continuous process the mass balance between incoming and outgoing streams must be in an equilibrium. Nevertheless "removed" provides that there is no direct feed-back stream from the unit to which the vapor is directed into the unit where the evaporation occurs. The percentages are calculated based on the diol monomer amount initially added in step a2), including the water content in the diol monomer, as weight percent. More preferably, at least 20% of the diol monomer are evaporated and removed. More preferably, not more than 50% of the diol monomer are evaporated and removed. As an example, 1 part of a waste stream containing 1% of water may be mixed with 3 parts of diol monomer containing 5% water. This exemplary blend contains on average 4% water. Evaporating from a batch process 1 part of the EG (= 33.3% by weight of the diol) removes simultaneously more than 90% of the water. Preferably more than 95% and even more preferably more than 98% of water are removed. As the presence of residual water can lead to a side product with the general structure A'-B' specifically having the formula HO-R¹-OOC-R²-COOH, and this side product is difficult to recover, it is desirable to limit the residual amount of water in the depolymerization solution directed to step a4) to a value below 0.5% by weight, more preferably below 0.25% and even more preferably below 0.1%. It is however important to limit the evaporation in such a way that the mole ratio is not shifted in a way that changes the equilibrium in the depolymerization solution too much towards higher oligomer contents. The ratio of the diol monomers to the polyester repeat units contained in the depolymerization solution should therefore remain above 4 to 1. Given the upper limit and the depolymerization reaction the lower limit decreases to 14 to 1.

In a continuous process in a single reactor, the residual water content remains slightly higher. If a series of continuously operated reactors is used and EG is evaporated sequentially, then a residual water content similar to a batch process can be reached. Evaporation can be initiated simply by heating at a given pressure, by applying a reduced pressure at a given temperature or by compression, followed by heating and decompression, the latter being known as flash evaporation.

In a preferred embodiment the evaporated liquids are directed to a separation unit, configured in such a way that a stream of recycled diol monomer with a water content between 2% and 12% by weight is obtained and at least a part of the recycled diol monomer is subsequently used in step a2).

In a preferred embodiment a liquid stream is obtained from one or more of the steps including and after step a5), wherein the liquid stream comprises water and diol monomer, and wherein the liquid stream is directed to a separation unit configured in such a way that a stream of recycled diol monomer with a water content between 2% and 12% by weight is obtained and at least a part of the recycled diol monomer is subsequently used in step a2) .

In a preferred embodiment, a vapor stream is obtained during step a3), and a liquid stream is obtained from one or more of the steps including and after step a5). Both streams comprise water and diol monomer, and both streams are directed to a common separation unit configured in such a way that a stream of recycled diol monomer is obtained.

The common separation unit preferably comprises at least a distillation column, which allows for a heat exchange between the vapor stream and the liquid stream.

The separation unit may be further configured to recover other liquids, especially water, into individual purified liquid streams.

The advantage of the present invention is the fact that the recovered diol monomer may contain up to 13% by weight, preferably in the range between 2% and 12% of residual water, when combined with a waste stream in step a2). This simplifies the liquid recovery compared to systems where dry diol monomer has to be used. At the same time a large part of the energy required for evaporation is recovered for heating purposes in the separation unit, especially the distillation column.

It is therefore preferred to direct liquids collected from step a6) in liquid form and liquids collected from step a3) in gaseous form into a common distillation column and return at least a part of the recovered diol monomer with a residual water content between 2% and 12% to step a2).

Alternatively, the evaporated liquids are directed to the waste stream of step a1). The mass and temperature ratios are selected in such a way that the majority of the diol monomer condenses and the majority of the water remains in vapor form.

Such heat and mass exchange can occur in a fixed bed vessel where both inlet streams are entered from the top. At the bottom, a vapor stream can be separated from the solid waste stream, with a part of the condensed diol monomer remaining in the waste stream. Optionally, the heat exchange may occur indirectly in a heat exchanger like a reactor with a heating mantle of heating coils. The resulting condensate may be combined with the waste stream.

In a preferred embodiment of the present invention, the recycled diol monomer is used to dissolve oligomer which has been obtained from a polyester waste stream. Subsequently, the recycled diol monomer containing the dissolved oligomer is used in step a2). Typically, the oligomer is obtained from an additional cleaning step of any of the steps a3) to a5). The oligomer may be in the presence of contaminants, absorbents and or filter aids. In this case the oligomer solution may be separated from solid particles. Optional absorbents and filter aids are also returned to step a2). Together with the oligomer, other depolymerization products, such as condensation monomers and diol, are recovered as well.

According to a preferred embodiment, for the mixing with water in step a4) the amount of water or inert solvent compared to the amount of diol monomer is in the range between 5 : 1 and 1 : 3 and one or more of the following conditions are fulfilled:
- the water is added into the solution;
- the temperatures of the two liquid streams to be mixed should be adjusted before mixing in such a way that without the need for evaporation the resulting diluted solution reaches a temperature below its boiling point but above a temperature at which precipitation of the condensation monomer would start;
- the water addition is performed in such a way that the solution reaches a temperature below 90°C within 1 hour after the beginning of the water addition;
- the water addition is performed in such a way that the solution is present in an agitated vessel and the water is added in multiple positions into the vessel;
- the water addition is performed in such a way that the solution flows through a pipe and the water is injected into the pipe;
- the water addition is performed in such a way that the solution is maintained at a temperature above 70°C;
- the water addition is performed in such a way that the solution reaches a temperature below 105°C.

In a preferred embodiment of the present invention the waste stream in step a1) comprises liquifying contaminant at a concentration of 0.1% to 48% by weight, based on the entire amount of the waste stream, where liquifying contaminant is defined as substances which are solid at room temperature, but liquid and not soluble in the depolymerization solution formed in step a3) under the conditions of step a3). The depolymerization solution formed in step a3) is divided into two portions while maintaining the liquifying contaminant in a liquid state. The two portions may be divided in two individual, mechanically separated streams. Preferably, the two portions are layered on top of each other. Said first portion contains liquifying contaminant, and said second portion is essentially free of liquifying contaminant. Where the distinction of the individual portions is not obviously visible, the distinction is made based on the fact that the fist portion contains 90% or more of the total amount of the liquifying contaminant and the second portion contains up to 10% by weight of the total amount of the liquifying contaminant.

According to this preferred embodiment, the liquifying contaminant in said first portion is solidified in the presence of at least a part of the depolymerization solution by contact with water or an inert solvent as a cooling liquid, and subsequently removed from the diluted solution in solid form. Said second portion is subsequently combined with said first portion.

The portions may have different volumes or flow rates. The initial accumulation of the liquifying contaminant occurs due to density differences between the depolymerization solution and the liquifying contaminant in liquid form. The cooling liquid as well as the solidification of the liquifying contaminant typically reduce the density difference. The start of adding the cooling liquid is after sufficient accumulation in the first portion has occurred. The upper limit of the water or inert solvent that is added to the first portion is the total amount of water or inert solvent which will be added in step a4). The lower limit of the water or inert solvent that is added to the first portion is the amount of water or inert solvent necessary to cool the first portion to a temperature sufficiently low to solidify the liquifying contaminant. Typical liquifying contaminants such as polyolefins require cooling below 110°C. For some low melting polyolefin copolymers temperatures as low as 80°C may be required. The solidified liquifying contaminant is preferably removed by a screen, which allows the solution to pass through but retains the majority of the liquifying contaminant in solid form. Smaller particles and particles with a small density difference to the diluted solution are slower to separate by density difference and may remain suspended. Therefore, the solidified liquifying contaminant is preferably removed by a screen, which is assembled inside the separation vessel. To facilitate the cleaning of the screen it is desirable to reduce the temperature sufficiently to prevent the liquifying contaminant form sticking on the screen. The screen openings have to be sufficiently wide to allow small particles of precipitated depolymerization products to pass through the screen.

It is an advantage of the present invention that by limiting the cooling to the first portion, less cooling capacity is required to solidify the liquifying contaminant. This allows to reduce the amount of cooling liquid and it allows to increase the temperature of the cooling liquid temperature, which is essential to prevent shock cooling. If not all water or inert solvent is added into the first layer, the remaining liquid can be added to any portion before or after the combination of the first portion and the second portion but before step a5).

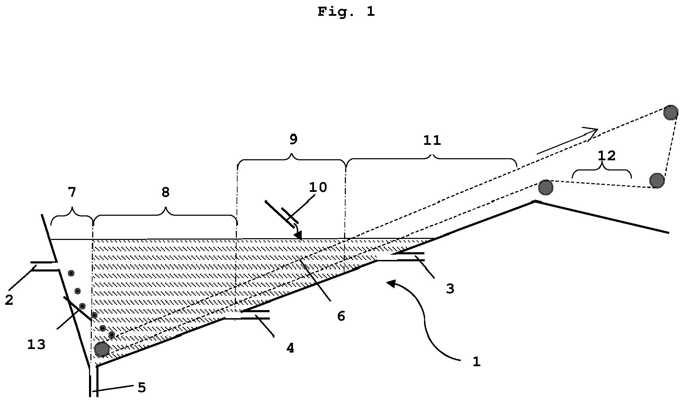

In a specific preferred embodiment of the present invention, the liquifying contaminant in liquid form has a density below the depolymerization solution formed in step a3). The separation into two portions occurs in a separation vessel with at least one supply opening for the depolymerization solution containing the liquifying contaminant on one side, with at least one removal opening for the depolymerization solution on the other side, with a separation zone between the two openings and with a cooling zone between the separation zone and the removal opening. In the separation zone the depolymerization solution separates into a first phase containing the liquifying contaminant in an upper layer and a second phase essentially free of the liquifying contaminant in a lower layer. Water or inert solvent is added to the upper layer in the cooling zone in an amount sufficient to solidify the liquifying contaminant. A typical apparatus for this separation step is shown in Figure 1 and explained in the accompanying text. The provided general specifications may apply to any apparatus suitable for the separation.

According to a further preferred embodiment of the present invention a liquifying substance is added to the depolymerization solution before the cooling zone. The liquifying substance comprises a substance which has a melting point above 90°C but below the temperature at which the depolymerization solution is supplied to the separation vessel, a density below 1g/cm³, preferably below 0.96g/cm³, and is essentially not soluble in the depolymerization solution. A suitable liquifying substance is for example a low-density polyethylene with a melt flow index above 10g/min, measured at 190°C. The advantage of such an intentional addition of a liquifying substance is the fact that it will act as floatation aide to small droplets of liquifying contaminants in the separation stage. It also acts like a scavenger for non-polar contaminants with a low solubility in the diol monomer, water or the inert solvent. This is of highest importance if the recycled condensation monomer is used for the manufacture of materials in direct contact with food.

According to a further preferred embodiment of the present invention, a liquifying substance is added to the depolymerization solution before the cooling zone, wherein the liquifying substance comprises a substance which has a melting point above 90°C but below the temperature at which the depolymerization solution is supplied to the separation vessel, a density below 1g/cm³ and is not soluble in the depolymerization solution.

In an additional preferred embodiment of the present invention the waste stream in step a1) comprises solid contaminant at a concentration of 0.1% to 48% by weight, based on the entire amount of the waste stream, wherein solid contaminant is defined as substances which are solid under the conditions of step a3) and not soluble in the depolymerization solution formed in step a3). The solid contaminant is removed from the diluted solution together with the liquifying contaminant. To assure that the solid contaminants independently of their density are separated as described, it is necessary to assemble the screen in such a way that it catches sinking and floating particles.

Any removed solid particles typically contain residues of the depolymerization solution. It is therefore preferred to recover as much of the solution as possible. This may be done by a flow of air or a washing solution.

The advantage of such a combined removal is the flexibility to operate the system with very different waste streams without the need to configure the system specifically for those waste streams. A further advantage is the single waste stream, which facilitates handling and solution recovery.

According to one embodiment of the present invention the recycled monomer product contains substances which are liquid at normal conditions. Such liquids comprise individual monomer A (HO-R¹-OH) with a melting point below 20°C, water or inert solvents. The amount of such liquid should be limited to 50% by weight of the entire recycled monomer product, as water, inert liquids and excessive amounts of individual monomer A have to be evaporated before or during polymerization of the polyester. Preferably the amount of such liquid is limited to 35% by weight of the entire recycled monomer product. Nevertheless, the presence of such liquids may be desirable as they reduce the melting point of the recycled monomer product. For a sufficient reduction of the melting point at least 3%, preferably more than 5% more preferably more than 7% and most preferably at least 10% of liquid are required, based on the entire amount of the recycled monomer product.

In one preferred embodiment of the present invention, the recycled monomer product is stored as a liquid at a temperature below the melting point of the condensation monomer A'-B"-A' having the formula HO-R¹-OOC-R²-COO-R¹-OH. In one preferred embodiment of the present invention, the recycled monomer product is transported as a liquid from a first location to a second location at a temperature below the melting point of the condensation monomer A'-B"-A' having the formula HO-R¹-OOC-R²-COO-R¹-OH. Such lowered transport or storage temperatures are desirable if side reactions may occur during transport and storage time at the melting temperature of the condensation monomer A'-B"-A' having the formula HO-R¹-OOC-R²-COO-R¹-OH .

In one preferred embodiment of the present invention, the recycled monomer product is released from transport or storage containers as a liquid at the second location at a temperature below the melting temperature of the condensation monomer A'-B"-A' having the formula HO-R¹-OOC-R²-COO-R¹-OH. Such lowered release temperatures are desirable to quickly liquefy a recycled monomer product which is a sticky solid or paste like, and therefore makes the extraction from the transport or storage container difficult.

In one preferred embodiment of the present invention, the diacid monomer B (HOOC-R²-COOH) is added to the recycled monomer product in liquid form at a temperature below the melting temperature of the condensation monomer A'-B"-A' having the formula HO-R¹-OOC-R²-COO-R¹-OH. Such lowered mixing temperatures are desirable to increase the viscosity of the monomer product which facilitates the dispersion of monomer B in the monomer product.

Substances which are liquid at ambient conditions and are contained in the recycled monomer product may be residual liquids from the preparation of the recycled monomer product, such as residual reactants or liquids used in a step to purify the recycled monomer product. Such liquids may also originate from an intentional addition of monomer A (HO-R¹-OH) or from the addition of an additive which is dissolved or dispersed in a liquid.

Substances which are liquid at ambient conditions and are contained in the recycled monomer product may be fully or partially evaporated before, during or after the addition of monomer B (HOOC-R²-COOH). This is especially of interest if the liquids comprise water or inert solvents which are not required for the subsequent polymerization of the polyester.

In one preferred embodiment of the present invention, the recycled monomer product is obtained by crystallization from a solution containing water and/or an inert solvent. After filtration and optionally washing the recycled monomer product contains up to 50% by weight residual water and/or inert solvent, based on the entire amount of recycled monomer product. The wet recycled monomer product is melted to provide a recycled monomer product in liquid form. Individual monomer B (HOOC-R²-COOH) is added to the wet recycled monomer product melt to obtain a monomer slurry. Preferably before and/or during the addition of individual monomer B (HOOC-R²-COOH), water and/or inert solvent is evaporated. The evaporation of water and/or inert solvent does not have to be complete as some water and/or inert solvent can be typically evaporated during the polymerization of the polyester. Water and inert solvents with a boiling point more than 100°C below the boiling point of the condensation monomer A'-B"-A' can be evaporated at a temperature near their pressure-dependent boiling temperature, without the risk of unwanted evaporation of the condensation monomer A'-B''-A'. As the content of water and/or inert solvent is reduced, the temperature needs to be raised to at least the melting point temperature of condensation monomer A'-B"-A'.

In one preferred embodiment the evaporation of water and/or inert solvent and the mixing of the recycled monomer product with monomer B (HOOC-R²-COOH) occur in subsequent vessels. The first vessel is designed to evaporate a majority of the water and/or inert solvent. The second vessel is designed for mixing the recycled monomer product with monomer B (HOOC-R²-COOH). Both vessels may be directly connected.

Such a first vessel is preferably equipped with an inlet opening for the recycled monomer product in liquid or solid form. This opening is preferably located at the upper end of the vessel.

The first vessel may be further equipped with an outlet opening for monomer product in liquid form. This opening is preferably located at the lower end of the vessel and in general at an opposing end to the inlet opening for the recycled monomer product. The opening preferably is controllable by a valve to regulate the flow of the slurry from the vessel.

The first vessel may be further equipped with an outlet opening for substances which are in gaseous form at the conditions required to provide the recycled monomer product in molten state. This opening is preferably connected to condensing means which allow the recovery of evaporated liquids.

The first vessel may be further equipped with mixing and whipping means. Such mixing and whipping means may comprise blades or paddles on a rotating shaft or a single screw or parallel screws.

The first vessel may be further equipped with heating means. Such heating means may constitute mantle heating or heated element inside the vessel. Heating means must be designed to provide sufficient heating to promote the evaporation of the water and/or inert solvent. If the recycled monomer product is provided in solid form, sufficient heating means should be provided to allow the melting of the recycled monomer product.

Such a second vessel is preferably equipped with an inlet opening for the recycled monomer product in liquid or solid form, as well as an inlet opening for individual monomer B (HOOC-R²-COOH) in solid form.

The second vessel may be further equipped with an outlet opening for the monomer slurry in liquid form. This opening is preferably located at an opposing end to the inlet opening for the recycled monomer product.

The second vessel may be further equipped with mixing means. Such mixing means may comprise blades or paddles on a rotating shaft or a single screw or parallel screws.

The second vessel may be further equipped with heating means. Heating means must be designed to provide sufficient heating to maintain the monomer slurry in liquid form.

In one preferred embodiment the evaporation of water and/or inert solvent and the mixing of the recycled monomer product with monomer B (HOOC-R²-COOH) occur in a common vessel.

Such a vessel is preferably equipped with an inlet opening for the recycled monomer product in liquid or solid form, as well as an inlet opening for individual monomer B (HOOC-R²-COOH) in solid form. If the recycled monomer product is provided in solid form, sufficient distance between the inlet openings should be provided to allow the melting of the recycled monomer product before individual monomer B (HOOC-R²-COOH) is added. It is possible, however, that individual monomer B (HOOC-R²-COOH) entering the vessel may be combined with recycled monomer product still in solid form, as long as the recycled monomer product is subsequently molten in the same vessel.

Another embodiment of the present invention comprises a premixing of the recycled monomer product and the individual monomer B (HOOC-R²-COOH) in solid form, and a subsequent melting and mixing to obtain a monomer slurry.

The vessel may be further equipped with an outlet opening for the monomer slurry in liquid form. This opening is preferably located at the lower end of the vessel and in general at an opposing end to the inlet opening for the recycled monomer product. The opening preferably is controllable by a valve to regulate the flow of the slurry from the vessel.

The vessel may be further equipped with an outlet opening for substances which are in gaseous form at the conditions required to provide the recycled monomer product in molten state. This opening is preferably connected to condensing means which allow the recovery of evaporated liquids.

The vessel may be further equipped with mixing means. Such mixing means may comprise stirring blades or paddles on a rotating shaft or a single screw or parallel screws.

The vessel may be further equipped with heating means. Such heating means may constitute mantle heating or heated element inside the vessel. Heating means must be designed to provide sufficient heating to promote the evaporation of the water and/or inert solvent and to maintain the monomer slurry in liquid form. If the recycled monomer product is provided in solid form, sufficient heating means should be provided to allow the melting of the recycled monomer product. Optionally a return flow of heated slurry may support the heating.

The vessel for the preparation of the monomer slurry may be an addition to the design of a process to produce a polyester. In this case, the vessel becomes part of the supply unit for the recycled monomer product.

Alternatively, the vessel may replace the vessel for the preparation of a monomer slurry predominantly made from individual monomer A (HO-R¹-OH) and individual monomer B (HOOC-R²-COOH) of a conventional process to produce a polyester. In one preferred embodiment of the present invention, the existing vessel for the preparation of a monomer slurry predominantly made from individual monomer A and individual monomer B is fitted with additional heating means to allow the preparation of a monomer slurry according to the present invention.

In one preferred embodiment of the present invention, the recycled monomer product is obtained by crystallization from a solution containing water and/or an inert solvent. After filtration the monomer product contains up to 50% by weight residual water and/or inert solvent, based on the entire amount of recycled monomer product. To reduce the amount of water, the crystallized recycled monomer product may be contacted with monomer A (HO-R¹-OH) and separated by additional filtration from the excess liquid. The obtained wet recycled monomer product is melted to provide a recycled monomer product in liquid form. The additional filtration step reduces the amount of required evaporation during slurry formation and/or polymerization of the polyester.

In one preferred embodiment of the present invention, the slurry is cooled, solidified and converted to particles. The conversion to particles can occur before (e.g. by a spray or droplet technology), during or after solidifying.

The particles may be formed by any suitable particle forming technology. This includes granulation like hot die-face cutting, droplet granulation or spray congealing. It includes contacting the substance to be solidified with cold surfaces, like rotoforming or drum flaking. The particles may be in the form of pellets, flakes or powder. The particles may be further treated to provide particles in a defined size range. This includes grinding, screening or air sifting.

Typical particle sizes are in the area of several micrometers to several centimeters. For handling, storage and transporting defined particles in the range of 0.3 mm to 3 cm are preferred. Depending on the amount of substances which are liquid at ambient conditions and present in the particles, the solidified particles may be brittle or ductile. They may be free flowing or sticky with a tendency to form agglomerates. For dry handling, storage and transporting free-flowing particles are preferred.

It is an advantage of the present invention that the preparation of a monomer slurry predominantly made from recycled monomer product and the individual monomer B and optionally individual monomer A allows to eliminate the slurry preparation step from the polymerization process.

It is an advantage of the present invention that preparing a solid monomer slurry predominantly made from recycled monomer product and the individual monomer B leads to reduced brittleness compared to the recycled monomer product alone.

It is an advantage of the present invention that a recycled monomer product with residual liquid may initially tend to form agglomerates, but after the addition of diacid monomer B (HOOC-R²-COOH) a slurry is obtained which does not exhibit the same stickiness after solidification. Such a free-flowing slurry may be stored and transported without the risk of clumping.

It is a further advantage of the present invention that in cases where the production of individual monomer B (HOOC-R²-COOH) and the polyester derived from it are in different locations, the production of a slurry at the location of production of the individual monomer B (HOOC-R²-COOH) can simplify logistics of recycled and virgin monomers to a production facility for the polyester.

Whereas individual monomer A (HO-R¹-OH) comprises the group of diols in unreacted form, monomer units A' (HO-R¹-O-) and A" (-OR¹-O-) comprise reacted diol units. Whereas individual monomer B (HOOC-R²-COOH) comprises the group of diacids in unreacted form, monomer units B' (HOOC-R²-CO-) and B" (-OC-R²-CO-) comprise reacted diacid units.

A preferred embodiment of the present invention requires that monomer A (HO-R¹-OH) comprises at least 90% of ethylene glycol (EG), wherein the percentage is calculated as mole percent of the total amount of individual monomer A, and monomer B (HOOC-R²-COOH) comprises at least 90% of terephthalic acid (TPA), wherein the percentage is calculated as mole percent of the total amount of individual monomer B.

Other suitable forms of monomers may comprise any comonomers typically used in manufacturing polyesters, like isophthalic acid (IPA), cyclohexanedimethanol (CHDM) or diethylene glycol (DEG).

The polyesters made from these monomers belong to the group of polyethylene terephthalates and their copolymers (PET) with a dominant repeat unit [TPA-EG-].

When using PET with EG as individual monomer A for depolymerization, the main monomer product will be bis(hydroxyethyl)terephthalate (BHET). It is obvious that in the presence of comonomers, comonomer-substituted BHET may be formed. For example, DEG may replace EG as reacted monomer A' or A". Upon re-polymerization, again PET will be obtained. Based on the present invention the PET is formed by adding TPA to the BHET.

As an alternative, monomer R³-OH, preferably methanol, may be used for depolymerization. Upon reaction with EG, again BHET will be obtained.

The depolymerization product from PET and EG may further contain dimers and oligomers of BHET. While the majority of such dimers and oligomers are terminated by OH end groups, some COOH end groups will be present. The depolymerization product may also contain monohydroxyethylterephthalate (MHET) and TPA. It is obvious that in the presence of comonomers also the side products, the dimers and oligomers may contain a part of the comonomers. Especially DEG may replace EG as reacted monomer A' or A". Optionally, the purifying steps after depolymerization may comprise steps by which the amount of MHET is reduced. Also, optionally the purifying steps after depolymerization may comprise steps by which the amount of DEG, CHDM and/or IPA substituted BHET and its oligomers is reduced. Optionally, such reduction is the result of dissolving, crystallizing and filtering BHET rich depolymerization product. In a preferred embodiment of the present invention, the BHET contains 3% to 50% by weight of a substance which is liquid at ambient conditions, preferably water and/or ethylene glycol. More preferred is a BHET which contains more than 5% by weight, more preferably more than 7% by weight, especially 10% by weight or more of a substance which is liquid at ambient conditions, preferably water and/or ethylene glycol. The same preferred ranges for depolymerization, for the various cleaning steps and for the slurry preparation and subsequent manufacturing of PET apply as defined above for the general polyesters.

Specifically, for the supply of the BHET containing water and/or ethylene glycol a temperature of 70°C to 100°C is preferred, and for the slurry preparation maintaining a temperature of 100°C to 130°C is preferred.

One preferred embodiment of the present invention is related to solid particles comprising:
- recycled monomer product, wherein the recycled monomer product contains 50 to 100% by weight of a condensation monomer having the formula HO-R¹-OOC-R²-COO-R¹-OH,
- diacid monomer B having the formula HOOC-R²-COOH at a mole ratio of B" units -OC-R²-CO- to individual diacid monomer B HOOC-R²-COOH in the range of 5:1 to 1:5, wherein R¹ and R² are the same or different and selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms.

Preferably, the mole ratio of B" units -OC-R²-CO- to individual monomer B HOOC-R²-COOH is lower than 4:1, more preferably lower than 3:1. As the mole ratio decreases from the upper limit, the amount of individual monomer A (HO-R¹-OH) that has to be evaporated during polymerization is reduced.

Preferably, the mole ratio of B" units -OC-R²-CO- to individual monomer B HOOC-R²-COOH is higher than 1:3 (i.e. greater than about 0.33), more preferably higher than 1:2. As the mole ratio increases from the lower limit, the amount of individual monomer A (HO-R¹-OH) that has to be added during polymerization is reduced. At the same time, the recycled content in the resulting polyester increases.

In an ideal case where the solid particles are the only source for units A" (-O-R¹-O-) and B" (-OC-R²-CO-) and the evaporation of individual monomer A (HO-R¹-OH) is within the typical limits of an existing polymerization plant, the mole ratio is in the range 2:1 to 1:1.

According to a preferred embodiment of the present invention, the solid particles comprise:
- recycled monomer product, wherein the recycled monomer product contains 50 to 100% by weight of a condensation monomer having the formula HO-R¹-OOC-R²-COO-R¹-OH,
- diacid monomer B having the formula HOOC-R²-COOH at a mole ratio of B" units -OC-R²-CO- to individual diacid monomer B HOOC-R²-COOH in the range of 3:1 to 1:4, wherein R¹ and R² are the same or different and selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms
- diol monomer A (HO-R¹-OH) at a mol ratio of total amount of B units to individual monomer A (HO-R¹-OH) in the range of 6:1 to 1:1.35.

Preferably, the mole ratio of B" units (-OC-R²-CO-) to monomer B (HOOC-R²-COOH) is lower than 2:1, more preferably lower than 1.5:1. As the mole ratio decreases from the upper limit, the amount of individual monomer A (HO-R¹-OH) that can be present in the monomer product increases.

Preferably, the mol ratio of total amount of B units to monomer A (HO-R¹-OH) is below 3:1, more preferably below 2:1.

Preferably, the mole ratio of B" units (-OC-R²-CO-) to individual monomer B (HOOC-R²-COOH) is higher than 1:3, more preferably higher than 1:2. As the mole ratio increases from the lower limit, the amount of recycled content in the resulting polyester increases. However, more of the individual monomer A (HO-R¹-OH) has to be evaporated during polymerization.

Preferably, the mol ratio of total amount of B units to individual monomer A (HO-R¹-OH) is above 1:1.25, more preferably above 1:1.

In an ideal case where the solid particles are the only source for units A" (-O-R¹-O-) and B" (-OC-R²-CO-) and the evaporation of individual monomer A (HO-R¹-OH) is within the typical limits of an existing polymerization plant, the mole ratio of B" units (-OC-R²-CO-) to individual monomer B (HOOC-R²-COOH) is in the range 1:2 to 1:1 and the mol ratio of total amount of B units to individual monomer A (HO-R¹-OH) in the range of 1.5:1 to 3:1.

Based on the above ranges the weight of the individual monomer A in the condensation monomer may exceed the dry weight. However, it is preferred to limit the content of individual monomer A to 50%.

Based on a preferred embodiment of the present invention, the solid particles comprise 2 to 40% by weight of a substance which is liquid at normal conditions. To maintain free-flowing slurry particles, the solid particles contain less than 10% by weight, preferably less than 6% by weight, of a substance which is liquid at normal conditions. The percentage is calculated as a ratio of the liquid to the particle weight including the liquid. In this range where free flowing particles with residual liquid are obtained, it becomes feasible to perform handling by usual bulk material means, such as pneumatic conveying, and to store the bulk material in large silos, which require free flowing product characteristics, while still allowing to convert the particles at a low temperature into a liquid. To limit the drying requirements, the solid particles preferably contain more than 5% by weight of a substance which is liquid at normal conditions. In this case the percentage is calculated as a ratio in the particle of the liquid to the BHET weight including the liquid.

The descriptions, definitions and calculations for the recycled monomer product and the monomers therein as well as for the related polyesters and the monomer units therein plus their monomers and depolymerization products apply in an analogous manner to the particles as for the process described above.

A preferred particle of the present invention comprises:
- 1 to 2 moles recycled BHET
- plus 1 mole TPA
- with a water content of up to 50% by weight of the total particle.

Another preferred particle of the present invention comprises:
- 2 to 3 moles recycled BHET
- plus 3 to 4 moles TPA
- plus 2 to 4 moles of EG
- with a water content of up to 40% by weight of the BHET weight.

Such particles may contain comonomers and side products as explained above.

The present invention will be described below in more detail with reference to non-limiting examples and drawings.
- Fig. 1: shows a schematic representation of an embodiment of a device according to the present invention.

Figure 1 shows a separation vessel 1 with one or more supply openings 2 on one side and one or more removal openings 3 on the other side of the separation vessel 1. Optionally, the separation vessel 1 contains additional removal openings 4 and/or drain openings 5 at the bottom. A screen 6 is configured to be provided in the separation vessel 1.

The supply openings 2 are positioned in such a way that depolymerization solution can be provided to a supply zone 7. The openings 2 may extend through the vessel wall, as shown, or may be positioned to supply the depolymerization solution from the top (not shown). The flow of the depolymerization solution is directed from the supply zone 7 towards the removal openings 3. Subsequent to the supply zone 7 the solution passes a separation zone 8 and a cooling zone 9. In the supply zone 7 a plate 13 may be installed to the reactor wall below the supply openings. This plate 13 directs sinking solid particles away from the vessel wall onto the screen 6.

In the separation zone 8 the depolymerization solution is separated into a first phase containing the liquifying contaminant in an upper layer and a second phase essentially free of the liquifying contaminant in a lower layer. The separation zone is designed in such a way that minimum turbulence occurs.

In the cooling zone 9 the liquifying contaminant in said first layer is solidified in the presence of a portion of the depolymerization solution by contact with water as a cooling liquid. The water is added through at least one supply pipe 10 onto the surface of the first phase or into the first phase in such a way that mixing throughout the upper layer occurs. This mixing may be the result of the water speed entering the solution, or it may be the result of a mixing device. The water temperature is selected in such a way that the upper layer is sufficiently cooled to allow the liquified contaminant to solidify. At the same time, it is high enough to prevent excessive supercooling. Typically, the water temperature is between room temperature and 70°C. The water may be supplied as a spray and/or one or multiple water jets. Preferably the water flow is directed towards the removal openings 3.

The screen 6 is configured to be provided in the separation vessel 1 in such a way that it lets depolymerization solution pass but removes solid contaminant. The screen 6 may be static, which requires periodic removal of solid contaminant, or it may be continuously operating, as shown, or indexing. The removed solid contaminant may be rinsed to recover adhering recycled monomer product. Such rinsing may be performed off-line or it may be performed, as shown, in a separate rinsing zone 11 on the screen 6. For rinsing, either the individual monomer and/or water is used. The rinsing liquid temperature should be similar or higher than the cooling water temperature to prevent additional precipitation or even redissolution of recycled monomer product. At the same the water temperature must be low enough to prevent melting of solid contaminant. Typically, the rinsing liquid temperature is between 40°C and 90°C. The rinsing liquid is returned to the process, either by directly returning it to the separation vessel 1, as shown, or after separately collecting it. Separate collection has that advantage of allowing additional cleaning steps, like fine filtration.

Rinsing may be followed by air purging to reduce the liquid amount adhering to solid contaminant.

If a continuous or indexing screen 6 is used, various measures are foreseen to clean the screen 6 from accumulating solids, such as solid contaminant or precipitated depolymerization product. Solid contaminant is removed by falling off the screen 6. This may be supported by scrapers. In addition, the screen may be back-flushed in a cleaning zone 12. The conditions for the back-flushing are similar to rinsing. However, the back-flush liquid is preferably not returned to the process without additional cleaning.

As the depolymerization solution flows through the separation zone 8, liquifying contaminant with a density below the solution moves towards the top of the solution. This movement towards the top depends on the density difference and the particle size. As the depolymerization solution flows through the cooling zone 9, agitation will create some downward movement of the liquifying contaminant. Overall the two layers that form (solution with and without liquifying contaminant) have no distinct border and they change their layer thickness. Important for the process is the fact that in the entire layer in which liquifying contaminant is present, sufficient cooling is achieved to solidify those contaminants.

Simultaneous with the solidification of the liquifying contaminant, parts of the recycled monomer product may precipitate. The screen 6 has to be designed in such a way that the precipitated monomer product passes through the screen 6 together with the solution. The liquifying contaminant typically has the tendency to agglomerate, which helps to form larger particles and helps the filtration. Typical screen openings are between 0.1mm to 30mm. Preferred screen openings are above 0.2mm and below 10mm.

If the particles of the liquifying contaminant remain too small, additional liquifying product may be added before the separation zone 8. Most appropriately, such additionally added liquifying product is added to the depolymerization solution. Suitable liquifying product is any product that has a melting point above 90°C but below the temperature at which the depolymerization solution is supplied to the separation vessel 1, a density below 1g/cm³ and is not soluble in the depolymerization solution. Preferred are olefin-based oligomers or high MFI polymers. Besides the ability to form larger agglomerates of liquifying contaminant in the separation vessel, the liquifying product may also act as means to reduce the viscosity of the liquifying contaminant during depolymerization and to extract non-polar contaminants from the depolymerization solution.

The one or more removal openings 3 are located behind the screen 6 and typically extend through the vessel wall.

Additional removal openings 4 may extend through the vessel wall at a lower level.

If only removal openings 3 are present, the total flow of diluted depolymerization solution is directed to subsequent process steps. If multiple removal openings 3 and 4 are present, the upper layer is predominantly directed towards removal openings 3 and the lower layer is predominantly directed towards openings 4. By adjusting the flows, the thickness of the layers can be adjusted. At the removal openings the two layers are both essentially free of liquifying contaminant, but differ in temperature and water content. Both flows of diluted depolymerization solution are directed to subsequent process steps. Subsequent process steps include pumping, mixing of the two flows and filtration.

Optionally one or more drain openings 5 are present at the bottom of the separation vessel 1. The drain openings 5 allow periodic or continuous removal of solid particles with a density above the density of the depolymerization solution.

The separation vessel 1 needs to be insulated to prevent heat loss. Optionally the walls of the vessel are trace heated or jacket heated. A hood or an encapsulation may be provided to prevent evaporating water, potentially containing some volatile contaminants, from escaping to the environment.

### Methods:

All provided compositions were measured by high pressure liquid chromatography (HPLC) using THF as a solvent and water/acetonitrile/methanol as eluent changing from a ratio of 90/5/5 to 10/45/45.

All provided metal contents were measured by Inductively Coupled Plasma (ICP) using nitric acid and microwave digestion to prepare the measurement solutions.

All thermal analysis results were measured by differential scanning calorimetry (DSC) at a heating rate of 10°C/min in a 40µl aluminum pan.

All compression measurements were performed on screened samples. The samples were placed in a crucible with a bottom surface area of 10.2 cm² at a fill height of 2 cm. A piston with a surface area of 10 cm² was pressed at constant speed into the crucible filled with the sample. Once a piston resistance of 1N was measured the zero point for the compression experiment was set. The experiment was continued until a compression force of 50N was obtained. The deflection at that point was recorded and divided by the initial fill height of the sample.

Water content in PET was measured by a halogen moisture analyzer under heating from 40 to 200°C at 1°C/min.

Water content in EG was measured using IR spectroscopy and chemometrics based on a calibration curve with known EG/water mixtures.

### Example 1

192.4 g PET flakes with approximately 0.3 wt.-% water and with a flake size of 2 - 12 mm, obtained from clear PET bottles, were mixed with 1.1 g zinc acetate dihydrate as a depolymerization catalyst and 425 ml ethylene glycol as reactant and solvent. The mole ratio of EG to PET repeat units was 7.5:1. The mixture was heated under reflux conditions at atmospheric pressure for 4 hours. The liquid temperature increased over time from 197 to 204°C. A clear depolymerization solution was obtained.

### Example 2

100 ml of the hot depolymerization solution from example 1 were rapidly poured into 75 ml water precooled to 1°C. The resulting solution was cloudy, white and had a temperature of 66°C. The solution was heated to 70°C and filtered through a filter with a pore size of 12 - 15 pm, to separate solidified oligomer from the solution. The filtration took 27 minutes and resulted in 13 g separated solids (after drying).

### Example 3

335 ml water were slowly added to the remaining depolymerization solution from Example 1 in such a way that the solution temperature remained above 100°C. After that, the temperature was maintained between 100 and 105°C until 1 hour had passed since the beginning of the water addition. The resulting solution was almost clear. Afterwards the solution was cooled to 70°C resulting in a cloudy, white solution. 175 ml of that solution were filtered as described in example 2. Filtration time was 8 minutes, and 17g solids were obtained.

From Examples 2 and 3 it can be seen that filtration is improved if the water addition is performed in a way that rapid supercooling of the depolymerization solution is avoided.

### Example 4

The procedure of Example 1 was repeated to obtain a depolymerization solution. 425 ml water were slowly added to the obtained depolymerization solution in such a way that the solution temperature remained above 100°C. After that the temperature was maintained between 100 and 105°C until 1 hour had passed since the beginning of the water addition.

The solution contained:

| | |
|---|---|
| MHET | 9.9 mg/g |
| BHET incl. comonomer substituted BHET | 204.2 mg/g |
| dimer incl comonomer substituted dimer | 32.1 mg/g |
| Other oligomers | 4.2 mg/g |

The solid content in the solution was 251 mg/g. The remaining weight was EG and water. The BHET content in the solid was 81.6%; and the additional content was as follows: MHET 3.9%, Dimer 12.8% and other oligomers 1.7%.

1.1% of the solid content were DEG-substituted BHET and dimer.

Afterwards the solution was cooled to 70°C and filtered through a filter with a pore size of 12 - 15pm to separate solidified oligomer from the solution.

The oligomer filter cake contained:

| | |
|---|---|
| MHET | 10.1 mg/g |
| BHET incl comonomer substituted BHET | 201.8 mg/g |
| dimer incl comonomer substituted dimer | 214.8 mg/g |
| Other oligomers | 37.7 mg/g |

The filtrate contained:

| | |
|---|---|
| MHET | 10.0 mg/g |
| BHET incl comonomer substituted BHET | 218.9 mg/g |
| dimer incl comonomer substituted dimer | 15.4 mg/g |
| Other oligomers | 1.3 mg/g |

### Example 5

The filtrate from Example 4 was cooled to room temperature and then placed in a refrigerator, where it was cooled and held at a temperature of 5°C while being agitated over the entire cooling period of 8 hours, and filtered by vacuum filtration through a filter with a pore size of 12 - 15 µm to separate solidified BHET from the solution.

The BHET rich filter cake contained:

| | |
|---|---|
| MHET | 12.9 mg/g |
| BHET incl comonomer substituted BHET | 433.9 mg/g |
| dimer incl comonomer substituted dimer | 26.2 mg/g |
| Other oligomers | 1.3 mg/g |

0.8% of the solid content were DEG-substituted BHET and dimer. The solid content in the BHET rich filter cake was 474mg/g. The remaining weight was EG and water.

The filtrate contained:

| | |
|---|---|
| MHET | 5.3 mg/g |
| BHET incl comonomer substituted BHET | 14.7 mg/g |
| dimer incl comonomer substituted dimer | 0.8 mg/g |
| Other oligomers | 0.03 mg/g |

Comparing the BHET-rich filter cake from Example 5 with the depolymerization solution from Example 4 based on total solid content, the MHET content has reduced from 3.9% to 2.7% while the dimer and oligomer content reduced from 12.8% to 5.5% and from 1.7% to 0.3%, respectively. At the same time the DEG-substituted substances reduced from 1.1% to 0.8%.

From the examples 4 and 5 it can be seen that the crystallization procedure not only reduces the dimer and oligomer content of a monomer product, but also reduces the amount of monomers substituted by copolymers.

### Example 6

Examples 4 and 5 were repeated. 137 g solution after oligomer filtration and cooling was filtered through a filter with a nominal pore size of 20 µm and a surface area of 56 cm². The addition of solution to the filter was stopped when the flow of filtrate was visibly reduced. The vacuum was held constant at 500 mbar. The vacuum and with that the filtration was stopped once the surface of the filter cake looked dry. Total filtration time was 160 seconds. The resulting filter cake was 83g and the filtrate was 54g.

The filter cake contained:

| | |
|---|---|
| MHET | 4.7 mg/g |
| BHET incl comonomer substituted BHET | 285.5 mg/g |
| dimer incl comonomer substituted dimer | 57.2 mg/g |
| Other oligomers | 4.9 mg/g |

The solid content in the filter cake was 352 mg/g. The remaining weight was EG and water. The BHET content in the solid was 81%; the remaining components were as follows: MHET 1.3%, Dimer 16.2% and other oligomers 1.4%.

After the initial filtration, the filter cake was washed 3 times by spraying 45 g each time of demineralized water on the filter cake. Filtration was run each time until the surface of the filter cake looked dry. This took 146, 61 and 65 seconds and resulted in 50, 49 and 45.5 g of filtrate for each washing step. At the end the filter cake underwent dewatering under vacuum for 120 seconds, resulting in 30g filtrate.

After dewatering the filter cake contained:

| | |
|---|---|
| MHET | 1.0 mg/g |
| BHET incl comonomer substituted BHET | 562.9 mg/g |
| dimer incl comonomer substituted dimer | 70.6 mg/g |
| Other oligomers | 8.0 mg/g |

The weight of the filter cake was 43.5g. The solid content in the filter cake was 643 mg/g. The remaining weight was mostly water. The BHET content in the solid was 87.6%; the remaining components were as follows MHET 0.2%, Dimer 11% and other oligomers 1.3%. The antimony and zinc content were 0.75 and 1.6 ppm, respectively.

In the depolymerization solution, an initial zinc content of 274 ppm due to the addition of the zinc acetate catalyst for depolymerization, and an initial antimony content of approximately 39 ppm due to the presence of antimony catalyst in the PET was present. In the BHET-rich filter cake the residual antimony content was less than 2% and the residual zinc content was less than 0.6% of the initial values.

From example 6 it can be seen that the step of washing further improves the quality of the BHET-rich filter cake and reduces the amount of liquid contained therein.

### Example 7

Example 6 was repeated, however without the oligomer filtration after depolymerization. 72g of solution were used.

Total filtration time was 115 seconds. The resulting filter cake was 47.5 g and the filtrate was 24.5 g. The water amount for the 3 times washing was 28 g each. Filtration times for the washing were 95, 45 and 50 seconds; dewatering time was 120 seconds.

After dewatering the filter cake contained:

| | |
|---|---|
| MHET | 1.9 mg/g |
| BHET incl comonomer substituted BHET | 604.8 mg/g |
| dimer incl comonomer substituted dimer | 85.3 mg/g |
| Other oligomers | 13.8 mg/g |

The weight of the filter cake was 24.6 g. The solid content in the filter cake was 706mg/g. The remaining weight was mostly water. The BHET content in the solid was 85.7%; the remaining components were as follows: MHET 0.3%, Dimer 12.1% and other oligomers 2.0%. The antimony and zinc content were 1.5 and 5.3 ppm, respectively.

Comparing Example 6 and 7, higher quality BHET and better yield per filter area has been obtained by using an oligomer filtration before the recovery of the BHET-rich product. The higher quality applies not only for a reduced oligomer content, but also for a reduced metal content.

### Example 8

The filter cake from example 7 was additionally washed with 2 times 28 g water. The filter cake weight reduced to 24.2 g. The antimony and zinc content were 1.2 and 3.9 ppm, respectively. The comparison of Examples 6 and 8 continues to shows the lower metal content when using a step for oligomer filtration, even if additional washing steps are applied. Nevertheless, additional washing steps offset part of the disadvantages of avoiding the step of oligomer filtration.

### Example 9

Example 1 was repeated, however with the difference that water was added so that the PET had a moisture content of 2wt.-%. The MHET content in the solution was measured to be 1.7%.

### Example 10

Example 1 was repeated, however with the difference that the PET was dried for 5 days under vacuum at 55°C before depolymerization, and that a pure ethylene glycol with less than 0.1% water was used. The MHET content in the solution was measured to be 0.1%.

From example 9 and 10 it can be seen that MHET formation can be avoided if the ingress of water into depolymerization is avoided.

From Example 5 it is apparent that over 25% of the solid content in the final filtrate were MHET. This indicates that the formation of MHET leads directly to additional losses.

As a consequence, losses can be reduced, if the MHET formation is avoided due to the reduction of water in the feed streams.

### Example 11

Examples 1 was repeated with undried PET. The moisture content was measured to be approximately 0.3 wt.-%.

425 ml water were added to the hot depolymerization solution in such a way that the solution temperature remained above 100°C. The water addition lasted approximately 15 minutes.

The MHET content in the solution was measured to be 1.9%.

After that the temperature was maintained at 105°C for 1 hour. The MHET content increased to 2.8%.

Comparing the MHET content of example 11 (1.9%) with the expected MHET deducted from examples 9 and 10 (0.27% by linear interpolation) it can be seen that additional MHET was formed during water addition, and that the subsequent heating lead to the formation of additional MHET.

As a consequence, losses can be reduced, if the MHET formation is avoided due to the reduction of the contact time between the hot depolymerization solution and water.

### Example 12

Example 9 was repeated. After depolymerization, 100 ml of the solution were heated under vacuum (800 mbar) to remove 32 ml of solvent (mostly ethylene glycol). The initial mole ratio of EG to PET repeat units was 7.5:1. Due to the depolymerization reaction the mole ratio was reduced to 6.6:1. Due to evaporation 41% of the initially added ethylene glycol were removed. The final mole ratio was reduced to 3.5:1. During evaporation the temperature increased from 70°C to 140°C.

65 ml water were added to the hot depolymerization solution in such a way that the solution temperature remained above 100°C. The water addition lasted approximately 15 minutes. Afterwards the solution was rapidly cooled, reaching below 60°C within 15 minutes.

The solution contained:

| | |
|---|---|
| MHET | 3.3 mg/g |
| BHET incl comonomer substituted BHET | 239.2 mg/g |
| dimer incl comonomer substituted dimer | 46.0 mg/g |
| Other oligomers | 8.1 mg/g |

The solid content in the solution was 297mg/g. The remaining weight was EG and water. The BHET content in the solid was 80.6%; the remaining components were as follows: MHET 1.1%, Dimer 15.5% and other oligomers 2.7%.

1.2% of the solid content were DEG-substituted BHET and dimer.

Comparing example 4 and 12 and considering the MHET formation discussed in example 11, it can be seen that a reduced amount of MHET could be obtained when solvent was evaporated from the depolymerization solution. However, as the solvent was removed to such a low mole ratio, the content of dimer and oligomers increased by 1.7% and 1%, respectively.

### Example 13

192.4 g PET flakes with a flake size of 2 - 12 mm, obtained from clear PET bottles, were mixed with 1.1 g zinc acetate dihydrate as a depolymerization catalyst and 601.9 ml ethylene glycol as reactant and solvent. The PET contained 1 wt.-% water, and the EG contained 4.1 wt.-% water. The mole ratio of the dry EG to the dry PET repeat units was 10.2:1. The mixture was heated under boiling conditions at atmospheric pressure until 173 ml of EG and water had evaporated, which took about 100 minutes. Excluding the water, this is equal to 25.2% EG removal based on the initial EG amount. The reaction was continued under reflux conditions for a total reaction time of 4 hours. The final mole ratio was reduced to 6.8:1. The liquid temperature increased over time to 205°C. A clear depolymerization solution was obtained.

The solution contained:

| | |
|---|---|
| MHET | 1.0 mg/g |
| BHET incl comonomer substituted BHET | 312.5 mg/g |
| dimer incl comonomer substituted dimer | 50 mg/g |
| Other oligomers | 7.1 mg/g |

The solid content in the solution was 370.6mg/g. The remaining weight was EG. The BHET content in the solid was 84.3%; the remaining components were as follows: MHET 0.3%, Dimer 13.5% and other oligomers 1.9%.

0.9% of the solid content were DEG-substituted BHET and dimer.

425ml water were added to the hot depolymerization solution in such a way that the solution temperature remained above 100°C. The water addition lasted approximately 15 minutes. Afterwards the solution was slowly cooled to 80°C for approximately 1 hour.

The solution contained:

| | |
|---|---|
| MHET | 4.9 mg/g |
| BHET incl comonomer substituted BHET | 186.8 mg/g |
| dimer incl comonomer substituted dimer | 29.7 mg/g |
| Other oligomers | 4.1 mg/g |

The solid content in the solution was 225.5mg/g. The remaining weight was EG and water. The BHET content in the solid was 82.8%; the remaining components were as follows: MHET 2.2%, Dimer 13.2% and other oligomers 1.8%.

1% of the solid content were DEG-substituted BHET and dimer.

Comparing examples 9 and 13 before the addition of water shows the reduced amount of MHET that could be obtained when solvent was evaporated during depolymerization despite a much higher amount of added water at the beginning.

The same is apparent when comparing examples 4 and 13 after the addition of water. In addition, and contrary to example 12, no negative influence regarding the oligomer content was observed. The increase of the MHET content during the water addition in example 13 is attributed to the slower cooling compared to example 12, as discussed in example 11.

A further advantage of the procedure used in example 13 compared to example 12 is the fact that no vacuum was necessary for the operation.

### Example 14

The procedure of Example 6 was repeated. The wet BHET-rich product was dissolved in 70°C water and filtered to obtain a BHET solution with minimal oligomer content. The received solution was cooled to 5°C and filtered. The filter cake was dried in a vacuum oven at 60°C. The sample contained 95.2% BHET, 0.5% MHET and 4.3% dimer. This sample was considered as clean BHET. It had a bulk density of 580 kg/m³.

Samples were prepared with the following compositions in wt.-%:

| | % BHET | % water | % ethylene glycol | % liquid content |
|---|---|---|---|---|
| Sample 14-1 | 100 | | | |
| Sample 14-2 | 99.6 | 0.4 | | 0.4 |
| Sample 14-3 | 94.8 | 5.2 | | 5.2 |
| Sample 14-4 | 85 | 15 | | 15 |
| Sample 14-5 | 78 | 22 | | 22 |
| Sample 14-6 | 63 | 37 | | 37 |
| Sample 14-7 | 39 | 61 | | 61 |
| Sample 14-8 | 93 | | 7 | 7 |
| Sample 14-9 | 88 | | 12 | 12 |
| Sample 14-10 | 78 | | 22 | 22 |
| Sample 14-11 | 58 | | 42 | 42 |
| Sample 14-12 | 47 | | 53 | 53 |
| Sample 14-13 | 96.8 | 3.2 | | 3.2 |
| Sample 14-14 | 98.1 | 1.9 | | 1.9 |

The following measurements were performed:
DSC measurement: Samples 14-1 to 14-7 and 14-13 to 14-14 were scanned from -50 to 120°C in a closed pan to prevent evaporation:

| | peak [°C] | left border [°C] | right border [°C] | Endset [°C] |
|---|---|---|---|---|
| Sample 14-1 | 110.9 | 87 | 119.3 | 113 |
| Sample 14-2 | 111.0 | 87 | 118.4 | 114 |
| Sample 14-3 | 92.2 | 38 | 99.7 | 98 |
| Sample 14-4 | 62.2 | 40 | 86.7 | 85 |
| Sample 14-5 | 61.3 | 44 | 79.3 | 71 |
| Sample 14-6 | 61.0 | 44 | 75.1 | 67 |
| Sample 14-7 | 61.1 | 46 | 72.2 | 65 |
| Sample 14-13 | 95.0 | 37.3 | 101.7 | 100 |
| Sample 14-14 | 102.4 | 43.1 | 110.0 | 106 |

Except for samples 14-1 to 14-2, all samples showed an ice peak meaning a melting peak of water.

BHET had a melting peak at 111°C and a narrow melting range, achieving complete melting at around 114°C. Already 1.9% of water were sufficient to shift the melt peak temperature and to significantly broaden the melt peak, indicating a dual structure.

At 3.2% water complete melting as indicated by the end-set was achieved more than 10°C below the melting peak temperature of the dry BHET. At a water content of 15% and above, the melt peak shifted to 62°C or slightly below and the melting peak narrowed, indicating a homogeneous, wet BHET structure. Depending on the water amount between 15 and 37%, complete melting occurred between 67 and 85°C.

Overall the addition of water allowed to liquify the BHET significantly below its melting temperature.

DSC measurement: Samples 14-8 to 14-12 were scanned from -50 to 250°C in a closed pan to prevent evaporation:

| | | peak [°C] | left border [°C] | right border [°C] | Endset [°C] |
|---|---|---|---|---|---|
| Sample 14-1 | | 110.9 | 87 | 119.3 | 113 |
| Sample 14-8 | | 106.1 | 56 | 115.0 | 110 |
| Sample 14-9 | | 100.3 | 26 | 110.6 | 106 |
| Sample 14-10 | | 84.9 | 23 | 101.8 | 92 |
| Sample 14-11 | | 72.2 | 19 | 96.5 | 90 |
| Sample 14-12 | | 70.0 | 23 | 90.9 | 87 |

Only sample 14-12 showed the expected ice peak at -13°C.

BHET had a melting peak at 111°C and a narrow melting range, achieving complete melting at around 114°C. Already 7% of ethylene glycol were sufficient to shift the melt peak temperature and to broaden the melt peak, indicating a dual structure. At an ethylene glycol content of 42% and above, the melt peak shifted to 72°C or slightly below and the melting peak narrowed, indicating a homogeneous, wet BHET structure. Depending on the ethylene glycol amount between 22 and 53%, complete melting occurred between 87 and 92°C.

Overall the BHET was less sensitive to residual ethylene glycol than to water. Nevertheless, it still showed the ability to lower melting conditions.

### Example 15

The clean BHET from Example 14 was used. Water or ethylene glycol were added to solid BHET at room temperature.

Samples were prepared with the following compositions in wt-%:

| | % BHET | % water | % ethylene glycol | % TPA |
|---|---|---|---|---|
| Sample 15-1 | 70 | 30 | | |
| Sample 15-2 | 80.4 | | 19.6 | |
| Sample 15-3 | 52.3 | | 12.8 | 34.9 |
| Sample 15-4 | 44.2 | | 10.8 | 45.0 |
| Sample 15-5 | 67.1 | | | 32.9 |
| Sample 15-6 | 52.1 | 22.4 | | 25.5 |

Products with the following characteristics were obtained:

| | BHET:TPA mol ratio | diol:diacid mol ratio | EG:TPA mol ratio | Wt.-% liquid content |
|---|---|---|---|---|
| Sample 15-1 | | 2 | | 30 |
| Sample 15-2 | | 3.00 | | 19.6 |
| Sample 15-3 | 0.98 | 1.48 | 0.98 | 12.8 |
| Sample 15-4 | 0.64 | 1.17 | 0.64 | 10.8 |
| Sample 15-5 | 1.33 | 1.14 | 0 | 0 |
| Sample 15-6 | 1.33 | 1.14 | 0 | 22.4 |

The sensitivity of the BHET to water can be used to prepare a liquid at low temperatures.

Sample 15-1 was heated to 90°C. Although still 20°C below the melting temperature of BHET, a clear liquid was obtained. The liquid was used for viscosity measurements at 70, 75, 80 and 90°C, at shear rates of 10, 100 and 500 /s.

| | T = 70°C | T = 75°C | T = 80°C | T = 90°C |
|---|---|---|---|---|
| 10 [1/s] | 270 | 130 | 97 | 63 |
| 100 [1/s] | 22 | 12 | 14 | 11 |
| 500 [1/s] | 8.9 | 6 | 6 | 6 |

The solution had very little temperature sensitivity. However, significant shear thinning was observed, indicating an alleviated formation of a slurry by agitation.

Sample 15-2 was heated to 90°C. Although still 20°C below the melting temperature of BHET, a clear liquid was obtained. The liquid was used for viscosity measurements at 80, 90, 100 and 120°C, at shear rates of 10, 100 and 500 /s. No shear thinning was observed.

| | T = 80°C | T = 90°C | T = 100°C | T = 120°C |
|---|---|---|---|---|
| 100 [1/s] | 42 | 27 | 17 | 9.5 |

Compared to sample 15-1, with water higher viscosities and more temperature sensitivity were observed.

In an attempt to prepare sample 15-3, sample 15-2 was tempered to 100°C and the required amount of cold (at room temperature) TPA in powder form was rapidly added. The temperature dropped and caused local solidification of the solution. An immediate formation of agglomerates was observed. Even under continued agitating it was not possible to break up the agglomerates.

In a second attempt to prepare sample 15-3, sample 15-2 was tempered to 100°C and the required amount of cold (at room temperature) TPA in powder form was slowly added while the obtained slurry was continuously agitated and heated. A non-transparent slurry was obtained (Sample 15-3) and used for viscosity measurements at 100, 110 and 120°C, at shear rates of 10, 100 and 500 /s. No shear thinning was observed.

| | T = 100°C | T = 110°C | T = 120°C |
|---|---|---|---|
| 100 [1/s] | 116 | 92 | 67 |

The resulting slurry had a mole ratio of diol to diacid of 1.5:1 and was suitable for the preparation of PET. 50% of the diacid units of the resulting PET stemmed from recycled BHET.

An increase in viscosity was observed as compared to sample 15-2, which is seen as a result of the added TPA. The temperature sensitivity remained.

Sample 15-3 was used to add additional TPA as described above. A non-transparent slurry was obtained (Sample 15-4) and used for viscosity measurements at 100, 110 and 120°C, at shear rates of 10,100 and 500 /s. No shear thinning was observed.

| | T = 100°C | T = 110°C | T = 120°C |
|---|---|---|---|
| 100 [1/s] | 348 | 263 | 193 |

The resulting slurry had a mole ratio of diol to diacid of 1.17:1, and was suitable for the preparation of PET. 39% of the diacid units of the resulting PET stemmed from recycled BHET.

A further increase in viscosity was observed as compared to sample 15-3, which is seen as a result of the added TPA. The temperature sensitivity remained.

Pure BHET from Example 14 was heated to 120°C, and the required amount of cold (at room temperature) TPA in powder form was slowly added while the obtained slurry was continuously agitated and heated. A non-transparent slurry was obtained (Sample 15-5) and used for viscosity measurements at 100, 110 and 120°C, at shear rates of 10, 100 and 500 /s. No shear thinning was observed.

| | T = 120°C |
|---|---|
| 100 [1/s] | 100 |

The resulting slurry had a mole ratio of diol to diacid of 1.14:1, and was suitable for the preparation of PET. 57% of the diacid units of the resulting PET stemmed from recycled BHET.

Despite the lower content of TPA as compared to sample 15-3, an increase in viscosity was observed, which is seen as a result of the missing liquid content in sample 15-5.

Sample 15-1 was tempered to 90°C and cold (at room temperature) TPA in powder form was slowly added while the obtained slurry was continuously agitated and heated. A non-transparent slurry was obtained (Sample 15-6) and used for viscosity measurements at 70, 75, 80 and 90°C, at shear rates of 10,100 and 500 /s.

| | T = 70°C | T = 75°C | T = 80°C | T = 90°C |
|---|---|---|---|---|
| 10 [1/s] | 296 | 134 | 143 | 95.9 |
| 100 [1/s] | 29.1 | 20.2 | 23.4 | 15.4 |
| 500 [1/s] | 15.5 | 14.5 | 12.8 | 7.1 |

The resulting slurry had a mole ratio of diol to diacid of 1.14:1, and was suitable for the preparation of PET. 57% of the diacid units of the resulting PET stemmed from recycled BHET.

A decrease in viscosity was observed as compared to sample 15-5, which is seen as a result of the present liquid component in sample 15-6. The temperature sensitivity remained.

Overall, Example 15 demonstrates the possibility to prepare a low viscosity slurry at a reduced temperature, if the recycled BHET contains residual liquid. However, care must be taken to maintain a liquid state when adding the TPA to avoid the formation of lumps due to a negative cooling effect.

### Example 16

The procedure of Example 6 was repeated. The wet BHET-rich product was dissolved in 70°C water and filtered to obtain a BHET solution with minimal oligomer content. The obtained solution was cooled to 5°C and filtered. 10 g of the filter cake was heated to evaporate a part of the contained water and to prepare the slurry with TPA. After 4 minutes of heating, a 100°C solution temperature was reached and strong bubbling was observed. 3.6g of TPA in powder form were added under intense stirring over a period of 2 minutes. The temperature continued to increase, and heating was stopped at approximately 105°C. The sample was poured on a cold metal plate and ground through an 8 mm screen to obtain a ground sample (Sample 16-1). The water content was measured as 6.4% based on the total sample weight.

To further analyze the sensitivity to residual liquids, samples with a composition as per sample 14-1, 14-3 and 14-5 were heated above their melting point and poured onto a cold metal plate to obtain solid sample plates. The sample plates were broken into pieces and ground in a mill through an 8 mm screen, resulting in 3 ground samples (Samples 16-2, 16-3 and 16-4, respectively).

An additional mixture was made by adding 0.8 g ethylene glycol to 15 g of sample 15-5 and converted as described above to obtain a ground sample (Sample 16-5).

### Composition in wt.-%:

| | % BHET | % water | % ethylene glycol | % TPA |
|---|---|---|---|---|
| Sample 16-1 | 62.8 | 6.4 | | 30.8 |
| Sample 16-2 | 100 | | | |
| Sample 16-3 | 94.8 | 5.2 | | |
| Sample 16-4 | 78 | 22 | | |
| Sample 16-5 | 63.7 | | 5.1 | 31.2 |

Products with the following characteristics were obtained:

| | BHET:TPA mol ratio | diol:diacid mol ratio | EG:TPA mol ratio | wt.-% liquid content | Bulk density [kg/m³] |
|---|---|---|---|---|---|
| Sample 16-1 | 1.33 | 1.14 | 0.00 | 6.4% | 784 |
| Sample 16-2 | | 2.00 | | 0% | |
| Sample 16-3 | | 2.00 | | 5.2% | |
| Sample 16-4 | | 2.00 | | 22.0% | |
| Sample 16-5 | 1.33 | 1.33 | 0.44 | 5.1% | 810 |

All samples were tested in a compression experiment.

The experiment was performed at different temperatures at a pressure of up to 5 N/cm². Results are given in % compression plus an observation on the flow behavior of the sample during the measurement.

| | T = 30°C | T = 50°C | T = 70°C | T = 90°C | T = 100°C |
|---|---|---|---|---|---|
| Sample 16-1 BHET with 9.3%-wt water | <5%; free flowing | <5%; free flowing | 39%; agglomerates | liquefies | |
| Sample 16-2 BHET dry | <5%; free flowing | <5%; free flowing | <5%; free flowing | 8%; free flowing | 33%; agglomerates |
| Sample 16-3 BHET with 5.2%-wt water | <5%; free flowing | <5%; free flowing | <5%; free flowing | liquefies | |
| Sample 16-4 BHET with 22%-wt water | 10%; agglomerates | liquefies | | | |
| Sample 16-5 BHET with 7.4%-wt EG | <5%; free flowing | <5%; free flowing | <5%; free flowing | 22%; agglomerates | |

The compression experiment resulted in a bulk density increase, either due to densification as a result of breaking pieces or by compression of the pieces.

At lower temperatures Sample 16-2 exhibited a brittle, glass like breaking behavior, while Samples 16-1, 16-3 and 16-5 exhibited a more ductile break. In all those cases, the compression was the result of the broken pieces being more densely packed. At higher temperatures, a transition to particle deformation is observed.

Sample 16-4 exhibited mostly particle deformation, which led to the observed densification, already at low temperatures.
As it is apparent from Example 16, dry BHET showed low compressibility and stickiness under pressure even at elevated temperatures, and therefore was considered as suitable for storage as a free-flowing bulk material. At >20% water content, bulk storage even at 30°C or above was not feasible. At around 5% water or EG content, bulk storage was seen as feasible up to 70°C. Even with 9.3% water in the BHET, particles could be formed together with TPA, which remained free flowing in bulk storage up to 50°C. Overall the sensitivity to EG was smaller than to water.

The bulk density of the so produced particles is significantly higher than the bulk density of oven dried BHET filter cake, which is advantageous for transport and storage.

### Example 17

To further analyze the influence of the added diacid and the liquid on the brittleness of the solid particles, samples with the composition as per 15-5 (Sample 17-1) and 15-4 (Sample 17.2) were heated above their melting point and poured onto a cold metal plate, to obtain a solid sample plate. The sample plates were compared in a torsion experiment which provides a stress strain curve from which a stress at break, and a torsion angle at break and an initial modulus can be reported.

| | Stress at break [kPa] | Strain at break [mrad] | Modulus [kPA/mrad] |
|---|---|---|---|
| Sample 17-1 BHET/TPA Dry | 4250 | 17 | 250 |
| Sample 17-2 BHET/TPA with EG | 1750 | 25 | 88 |

It could be demonstrated that the blend with the EG present had a softer more elastic behavior. This indicates lower brittleness which is seen as advantageous for material handling and storage operations.

### Example 18

To further analyze the influence of the added diacid in the solid particles, ground samples with a composition as per sample 14-1 (Sample 18-1) and 15-5 (Sample 18-2) were compared in an experiment which demonstrates mechanical sensitivity of the particles.

35 g of each sample were placed on a screen stack with a screen size of 6.3, 5, 4, 3.15, 2 and 1 mm, and were separated according to their particle size. The content of each screen was measured. Afterwards, the screen stack was placed on a shaking device and exposed to a shaking amplitude of 10 mm/g for 10minutes and subsequently to a shaking amplitude of 15 mm/g. The content of the screens was measured again and the difference for each fraction was calculated.

| | >6.3mm | 4-6.3mm | 2-4mm | 1-2mm | <1mm |
|---|---|---|---|---|---|
| Sample 18-1 | -5.8g | +3g | +1.6g | +0.1g | +1.1g |
| BHET | | | | | |
| dry | | | | | |
| Sample 18-2 | -2.5g | +1.3g | +0.4g | +0.1g | +0.7g |
| BHET/TPA | | | | | |
| Dry | | | | | |

During shaking both samples underwent a transition from larger to smaller particles. Mostly the largest category decreased in favor of the category below and the finest category.

The pure BHET underwent much more transition than the BHET with TPA added, indicating more resistance to mechanical forces resulting from material handling and storage operations for the blend.

### Example 19

360 g undried PET flakes with a flake size of 2 - 12 mm, obtained from light blue PET bottles, were mixed with 2 g zinc acetate dihydrate as a depolymerization catalyst and 1100 ml ethylene glycol as reactant and solvent. The PET contained approximately 0.3 wt.-% water. The EG contained 4.1 wt.-% water. The mole ratio of the dry EG to the dry PET repeat units was 10:1. The mixture was heated under boiling conditions at atmospheric pressure until 309 ml of EG and water had evaporated. This is equal to 28.1% of the initial wet EG amount or 24.6% EG removal based on the initial EG amount without water. The reaction was continued under reflux conditions for a total reaction time of 4 hours. The liquid temperature increased over time to 205°C. A clear depolymerization solution was obtained. The solution was cooled to 105°C and filtered through a filter with a pore size of 25 µm to separate unreacted residue. The obtained residue had a dry weight of 3.6g.

800 ml water were slowly added to the depolymerization solution in such a way that the solution temperature remained above 100°C. After that, the temperature was maintained between 100 and 105°C until 30 minutes had passed since the beginning of the water addition. Afterwards the solution was cooled to 70°C and filtered through a filter with a pore size of 25 µm to separate solidified oligomer from the solution. Filtration was supported by an overpressure of 2 bar. A filter area of 740cm² was required. A dry oligomer amount of 54.3 g was obtained.

3.2 g of activated carbon in powder form was added to the filtrate. The filtrate was reheated and maintained for 40 minutes at 90°C. The solution was filtered through a filter with a pore size of 0.45 µm.

The resulting filtrate was cooled to room temperature and then placed in a refrigerator, where it was cooled and held at a temperature of 5°C while being agitated over the entire cooling period of 8 hours. It was filtered through a filter with a pore size of 25 µm to separate solidified BHET from the solution. Filtration was supported by an overpressure of 1 bar. A filter area of 615 cm² was required.

After the initial filtration, the filter cake was washed 3 times by spraying 600 ml demineralized water on the filter cake. 602 g of wet filter cake were obtained.

The filter cake contained:

| | |
|---|---|
| MHET | 1.5 mg/g |
| BHET incl comonomer substituted BHET | 548.2 mg/g |
| dimer incl comonomer substituted dimer | 35.4 mg/g |
| Other oligomers | 3.9 mg/g |

The solid content in the filter cake was 598 mg/g. The remaining weight was mostly water. The BHET content in the solid was 93.0%; the other components were as follows: MHET 0.3%, Dimer 6.0% and other oligomers 0.7%. The antimony and zinc content in the solid were 2.9 and 3.5 ppm, respectively.

The wet BHET-rich filter cake was transferred to a one liter flask and transported to a facility equipped for the melt phase polymerization of PET. The flask was heated to liquify the content, and 176.3 g TPA (mole ratio BHET : TPA = 1:0.75) in powder form were added under constant heating and mixing while some of the water evaporated. 300 ppm of an antimony catalyst were added, and the hot slurry was transferred to a polymerization reactor where the residual water together with water and EG resulting from the polymerization reaction was evaporated. Temperature was subsequently raised to 290°C and the pressure was reduced to 2 mbar. The final polymer was poured on a cold plate and ground to powder. The resulting PET had an intrinsic viscosity of 0.55 dl/g. It had a L-value of 91 and a b* value of 0.9.

## Claims

1. A method for the preparation of a polyester with a repeat unit [-A"-B"] having the formula [-O-R¹-OOC-R²-CO-], comprising the steps:
a) providing a recycled monomer product, where the monomer product contains 50% to 97% by weight of a condensation monomer having the formula HO-R¹-OOC-R²-COO-R¹-OH, and 3% to 50% by weight of a substance which is liquid at ambient conditions, wherein said substance is selected from the group consisting of a diol with a melting point below 20°C, water and an inert solvent,
b) adding at least one diacid monomer B having the formula HOOC-R²-COOH to the recycled monomer product of step a), to obtain a monomer slurry,
c) using the monomer slurry from step b) for the polymerization of a polyester with the repeat unit [-A"-B"] having the formula [-O-R¹-OOC-R²-CO-],
wherein R¹ and R² are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms,
**characterized in that** the step of preparing said monomer slurry in step b) is executed in a way that allows maintaining the monomer slurry in liquid form.

2. The method according to claim 1, **characterized in that** the monomer slurry after step b) has
- a mole ratio of B" units (-OC-R²-CO-) to diacid monomer B having the formula HOOC-R²-COOH in the range of 5:1 to 1:5 and
- an amount of diol monomer A having the formula HO-R¹-OH between a minimum value Aₘᵢₙ and a maximum value Aₘₐₓ, where Aₘᵢₙ = 1.05 * diacid - 0.95 * B" units and
Aₘᵢₙ >= 0
and Aₘₐₓ = 1.75 * diacid - 0.25 * B" units
where individual diol, Aₘᵢₙ, Aₘₐₓ, B" units and diacid are expressed in mole amounts.

3. The method according to one of the preceding claims, **characterized in that** the diacid HOOC-R²-COOH added to prepare the monomer slurry is added without diol HO-R¹-OH or with an amount of diol HO-R¹-OH below the amount of diacid HOOC-R²-COOH, wherein the calculation is based on mole amounts.

4. The method according to one of the preceding claims, **characterized in that** the step a) of providing the recycled monomer product comprises the steps of
a1) providing a waste stream comprising a polyester with the repeat unit [-A"-B"] having the formula [-O-R¹-OOC-R²-CO-],
a2) forming a blend comprising the waste stream and at least one diol monomer HO-R¹-OH or terminating molecule R³-OH wherein R³ is an aliphatic hydrocarbon group containing 1 to 15 carbon atoms, which is capable of reacting with the polyester,
a3) exposing the blend obtained in step a2) in a reaction vessel to conditions suitable for a depolymerization of the polyester, resulting in a depolymerization solution containing a recycled monomer product, where the monomer product contains a condensation monomer having the formula HO-R¹-OOC-R²-COO-R¹-OH,
a4) mixing the depolymerization solution from step a3) with water or an inert solvent to obtain a diluted solution
a5) cooling the solution from step a4) to a temperature to cause precipitation of the recycled monomer product including the condensation monomer and
a6) recovering the precipitated recycled monomer product from the solution to obtain a recycled monomer product.

5. The method according to one of the preceding claims, **characterized in that** the recycled monomer product provided in step a) is in liquid form and at a temperature below the melting temperature of the condensation monomer having the formula HO-R¹-OOC-R²-COO-R¹-OH.

6. The method according to one of the preceding claims, **characterized in that** either of the steps of:
- releasing the recycled monomer product from a transport or storage container,
- transporting the recycled monomer product in a transport container,
- storing the recycled monomer product in a storage container
occurs with the recycled monomer product in liquid form at a temperature below the melting temperature of the condensation monomer having the formula HO-R¹-OOC-R²-COO-R¹-OH.

7. The method according to one of the preceding claims, **characterized in that** at least a part of a component of the recycled monomer product which is liquid at ambient conditions is evaporated before or during the preparation of a monomer slurry in step b).

8. The method according to any of the preceding claims, **characterized in that** the slurry obtained in step b) comprises water and/or inert solvent at 2% to 40% , based on the total weight of the slurry, and the preparation of the slurry is executed in a way that allows to maintain the monomer slurry in molten state while evaporating at least a portion of the water and/or inert solvent.

9. The method according to one of the preceding claims, **characterized in that** the monomer slurry obtained in step b) is cooled, solidified and converted to particles before being used in step c), wherein the conversion to particles can occur before, during or after solidifying.

10. The method according to one of the preceding claims, **characterized in that** the diol monomer A comprises more than 90% of ethylene glycol, wherein the percentage is calculated as mole percent of the total amount of diol monomer A, and the diacid monomer B comprises more than 90% of terephthalic acid, where the percentage is calculated as mole percent of the total amount of diacid monomer B.

11. Solid particles comprising:
a. recycled monomer product, wherein the recycled monomer product contains 50 to 100% by weight of a condensation monomer having the formula HO-R¹-OOC-R²-COO-R¹-OH,
b. diacid monomer B having the formula HOOC-R²-COOH at a mole ratio of B" units -OC-R²-CO- to diacid HOOC-R²-COOH in the range of 5:1 to 1:5,
wherein R¹ and R² are the same or different and selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms.

12. Solid particles according to claim 11, **characterized in that** the mole ratio of B'' units to diacid is in the range of 3:1 to 1:4, and the solid particles further comprise diol monomer A HO-R¹-OH at a mol ratio of total amount of B units to diol in the range of 6:1 to 1:1.35.

13. Solid particles according to one of the claims 11 and 12, **characterized in that** the particles comprise 2 to 40% by weight of a substance which is liquid at normal conditions.

14. Solid particles according to one of the claims 11 to 13, **characterized in that** the diol monomer A comprises more than 90% of ethylene glycol, where the percentage is calculated as mole percent of the total amount of diol monomer A, and the diacid monomer B comprises more than 90% of terephthalic acid, where the percentage is calculated as mole percent of the total amount of diacid monomer B.

15. A method for providing a recycled monomer product, wherein the monomer product contains 50% to 97% by weight of a condensation monomer having the formula HO-R¹-OOC-R²-COO-R¹-OH, comprising the steps:
a1) providing a waste stream comprising a polyester with the repeat unit [-A"-B"] having the formula [-O-R¹-OOC-R²-CO-],
a2) forming a blend comprising the waste stream and at least one diol monomer HO-R¹-OH, which is capable of reacting with the polyester,
a3) exposing the blend obtained in step a2) in a reaction vessel to conditions suitable for a depolymerization of the polyester resulting in a depolymerization solution containing a recycled monomer product, wherein the monomer product contains a condensation monomer having the formula HO-R¹-OOC-R²-COO-R¹-OH,
a4) mixing the depolymerization solution from step a3) with water or an inert solvent to obtain a diluted solution,
a5) cooling the diluted solution from step a4) to a temperature to cause precipitation of the recycled monomer product including the condensation monomer, and
a6) recovering the precipitated recycled monomer product from the solution to obtain a recycled monomer product containing 3 to 50% by weight of substance which is liquid at ambient conditions, wherein said substance is selected from the group consisting of a diol with a melting point below 20°C, water and an inert solvent,
**characterized in that** the ratio of the sum of all added diol monomers to the polyester repeat units contained in the waste stream is in the range between 5 : 1 and 15 : 1, and the ratio of the diol monomers to the polyester repeat units contained in the depolymerization solution is in the range between 4 : 1 and 14 : 1, wherein the ratios are molar ratios.

16. The method according to claim 4 or 15, **characterized in that** one or more of the following cleaning steps are applied:
- evaporation of volatile contaminants from any material stream of any of steps a1) to a6), especially from step a3) ;
- mechanical separation, such as filtration, of solid contaminants from any solution obtained in any of the steps a3) to a5);
- mechanical separation, such as filtration, of precipitated oligomer particles from any solution obtained in any of the steps a3) to a5);
- mechanical separation, such as filtration, of precipitated dimer particles from any solution obtained in any of the steps a3) to a5) ;
- removal of colorants and other high boiling organic contaminants by the use of activated carbon and the subsequent separation of the activated carbon from any solution obtained in any of the steps a3) to a5);
- removal of metals by the use of ion exchangers and the subsequent separation of the ion exchangers from any solution obtained in any of the step a3) to a5);
- redissolution of the obtained recycled monomer product in a diol monomer, water of an inert solvent or a mixture thereof, and a subsequent precipitation of the recycled monomer product and mechanical separation from the solution;
- purging and/or washing of the filter cake obtained in step a6) with air, water, individual monomer and/or an inert solvent.

17. The method according to claim 4 or 15, **characterized in that** the blend in step a2) contains between 2 and 10% by weight of water, and at least 15% but not more than 60% by weight of the diol monomer are evaporated and removed during step a3).

18. The method according to claim 4 or 15, **characterized in that** a liquid stream is obtained from one or more of the steps including and after step a5), wherein the liquid stream comprises water and diol monomer, and wherein the liquid stream is directed to a separation unit configured in such a way that a stream of recycled diol monomer with a water content between 2% and 12% by weight is obtained and at least a part of the recycled diol monomer is subsequently used in step a2) .

19. The method according to claim 4 or 15, **characterized in that** a vapor stream is obtained during step a3), wherein a liquid stream is obtained from one or more of the steps including and after step a5), where both streams comprise water and diol monomer, and wherein both streams are directed to a common separation unit that is configured in such a way that a stream of recycled diol monomer is obtained.

20. The method according to claim 4 or 15, **characterized in that** the recycled diol monomer is used to dissolve oligomer which has been obtained from a polyester waste stream, and subsequently the recycled diol monomer containing the dissolved oligomer used in step a2).

21. The method according to claim 4 or 15, **characterized in that** for the mixing with water in step a4) the amount of water or inert solvent compared to the amount of diol monomer is in the range between 5 : 1 and 1 : 3 and one or more of the following conditions are fulfilled:
- the water is added into the solution;
- the temperatures of the two liquid streams to be mixed should be adjusted before mixing in such a way that without the need for evaporation the resulting diluted solution reaches a temperature below its boiling point but above a temperature at which precipitation of the condensation monomer would start;
- the water addition is performed in such a way that the solution reaches a temperature below 90°C within 1 hour after the beginning of the water addition;
- the water addition is performed in such a way that the solution is present in an agitated vessel and the water is added in multiple positions into the vessel;
- the water addition is performed in such a way that the solution flows through a pipe and the water is injected into the pipe;
- the water addition is performed in such a way that the solution is maintained at a temperature above 70°C;
- the water addition is performed in such a way that the solution reaches a temperature below 105°C.

22. The method according to claim 4 or 15, **characterized in that** the waste stream in step a1) comprises liquifying contaminant at a concentration of 0.1 to 48% by weight, based on the entire amount of the waste stream, wherein the liquifying contaminant is defined as substances which are solid at room temperature but liquid and not soluble in the depolymerization solution formed in step a3) under the conditions of step a3), wherein the depolymerization solution formed in step a3) is divided into two portions while maintaining the liquifying contaminant in a liquid state, wherein said first portion contains liquifying contaminant and said second portion is essentially free of liquifying contaminant,
wherein the liquifying contaminant in said first portion is solidified in the presence of at least a part of the depolymerization solution by contact with water or an inert solvent as a cooling liquid and subsequently removed from the diluted solution in solid form and
wherein said second portion is subsequently combined with said first portion.

23. The method according to claim 22, **characterized in that** the liquifying contaminant in liquid form has a density below the depolymerization solution formed in step a3),
wherein the separation into two portions occurs in a separation vessel with at least one supply opening for the depolymerization solution containing the liquifying contaminant on one side, with at least one removal opening for the depolymerization solution on the other side, with a separation zone between the two openings and with a cooling zone between the separation zone and the removal opening,
where the depolymerization solution separates into a first phase containing the liquifying contaminant in an upper layer and a second phase essentially free of the liquifying contaminant in a lower layer in the separation zone, and
wherein water or an inert solvent is added to the upper layer in the cooling zone in an amount sufficient to solidify the liquifying contaminant.

24. The method according to one of the claims 22 to 23, **characterized in that** the waste stream in step a1) comprises solid contaminant at a concentration of 0.1 to 48% by weight, based on the entire amount of the waste stream, wherein solid contaminant is defined as substances which are solid under the conditions of step a3) and not soluble in the depolymerization solution formed in step a3),
wherein solid contaminant is removed from the diluted solution together with the liquifying contaminant.

25. The method according to one of the claims 22 to 24, **characterized in that** a liquifying substance is added to the depolymerization solution before the cooling zone, wherein the liquifying substance comprises a substance which has a melting point above 90°C but below the temperature at which the depolymerization solution is supplied to the separation vessel, a density below 1g/cm3 and is not soluble in the depolymerization solution.
